(19) Europäisches Patentamt
European Patent Office
Office européen des brevets

(11) Publication number: **0 432 759 A1**

(12) **EUROPEAN PATENT APPLICATION**

(21) Application number: **90123963.2**

(51) Int. Cl.5: **G11B 27/032**, G11B 27/28

(22) Date of filing: **12.12.90**

(30) Priority: **12.12.89 JP 322150/89**

(43) Date of publication of application: **19.06.91 Bulletin 91/25**

(84) Designated Contracting States: **DE GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Adachi, Tatsuya**
**30-1-309 Miiminamimachi**
**Neyagawa-shi, Osaka-fu(JP)**

(74) Representative: **Eisenführ, Speiser & Strasse**
**Martinistrasse 24**
**W-2800 Bremen 1(DE)**

(54) **Data recording method, end search method and connection recording method.**

(57) The object of the present invention is to provide a data recording method, an end searching method and a connection recording method of erecting a continuous recording flag showing that the recording completion point of a first face is in conformity to the recording start point of a second face before before the recording completion point of a read out area or a major data at the recording time, effecting an end searching of the reverse face by the inversion of the running direction if the continuous recording flag is erected when the read out area has been detected at the end searching time, entering into the waiting condition for the connection recording if the continuous recording flag is not erected, searching the recording completion point of the whole tape so that the connection recording may be effected.

*Fig. 1*

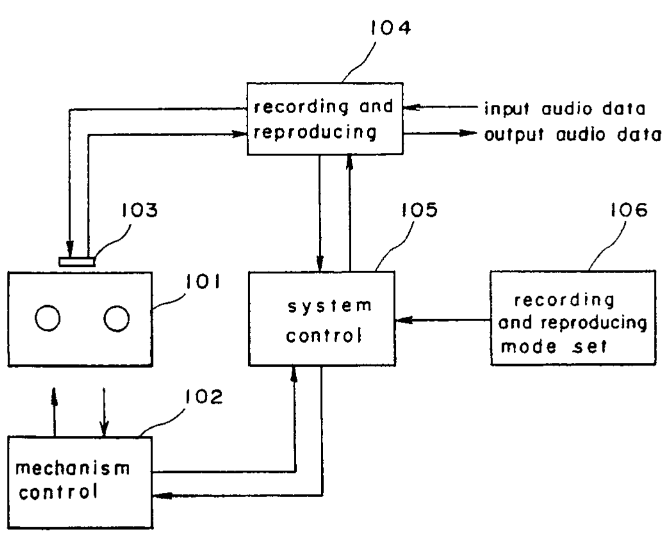


EP 0 432 759 A1

# DATA RECORDING METHOD, END SEARCH METHOD AND CONNECTION RECORDING METHOD

## BACKGROUND OF THE INVENTION

The present invention generally relates to an end search method in a recording, reproducing apparatus having two types of running directions in a forward direction, a backward direction of a S - DAT (fixed head system digital audio tape recorder) and so on, and a connection recording method, and a recording method of a control data to be used in the connection recording and the end search.

In a recordable apparatus such as a compact cassette, a S - DAT, a R - DAT (rotary head system digital audio tape recorder) or the like, the recording completion point information to be read even in the normal reproduction and the high speed search is recorded at the completion point of the recording on the recording medium so as to make it a guide in a case where the new region is recorded continuous to the region recorded at the previous time. The subsequent portion is adapted not to be accessed with the recording completion point information being provided as a guide of the final point of the effective region on the magnetic tape, so that the protection is provided not to read the undesired data by mistake. the information showing the trailing end of the operation region to be called the read out area is recommended to be recorded from page 89 to Page 90 of the "THE DAT CONFERENCE STANDARD, DIGITS AUDIO TAPE RECORDER SYSTEM" (DOCUMENT 1) issued by, for example, the DAT consultant conference in June, 1987. The reason why the recording of the read out area is necessary is as follows.

1. A guide in the connection recording
2. A guide of the final point of the effective region

Especially, the read out area becomes necessary in a case where the completion point of the recording of the previous time is behind the completion point of the latest recording when the new signal has been overridden on the tape once recorded. This is because the place of the completion point cannot be judged as the completion point of the latest recording is connected with the region of the recording of the previous time. Although it is possible to detect the completion point of the recording through the detection of the non-recorded portion in the case of the recording on the virgin tape, the completion point of the recording may be detected more positively and more quickly if the read out area is kept recoded. It is necessary to confirm the non-recorded condition for the number of the frames so as to positively judge the non-recorded portion, not the burst error by the drop out, in the judgement of the completion point by the non-recorded portion, but the completion point may be judged immediately when it has been detected if the read out area is recorded.

In, for example, the R - DAT, the read out area is recorded by 300 frames or more. When the read out area is detected at the end search time, the tape running is stopped to rewind several frames so as into the waiting condition for the connection recording. The connection recording means the recording effected so that the phase and so on of the frame may become continuous following the already recorded frames. The recording position of the frame already recorded is necessary to be confirmed so as to read the time cord, the frame number and so on before the connection recording. Also, as the tape speed is required to be made constant before the recording start, the running increase in the periods of the several frames is necessary. Therefore, the rewinding operation is effected by several frame after the detection of the read out area so as to effect the waiting.

The frame shows a pair by a plus azimuth track recorded by the plus azimuth head and a minus azimuth track recorded by the minus azimuth head and a minus azimuth track recorded by the minus azimuth head in the case of the R - DAT, and is a minimum unit which can be independently recoded, reproduced.

Also, the read out area ID is recorded in the area for auxiliary data recording use called a sub ID area. The data to be used for the control of the read out area ID and so on are called auxiliary data, and the major data such as audio data, image data and so on are called major data.

The R - DAT is illustrated from the page 47 to the passage 165 of the " Graphical DAT Reader" (Document 2) issued July 25, 1988 by OHM-Sha. Also, the S - DAT is explained from Page 42 to Page 46 of the document 2.

When the recording completion point tries to be searched by the recording, reproducing apparatus of a fixed head system having two forward, backward tape running directions of a compact cassette, a S - DAT and so on by the use of such a read out area ID as the above described R - DAT, the following problem points are provided.

1. When the end search is performed by a recording, reproducing apparatus having two running directions, there was no telling whether the read out area of a certain face was a recording completion point of the whole tape or is a recording completion point of the face.

2. As the information cannot be detected positively at the high speed search time when the recording period of the recording completion point information is short in the case of the end search, there is a possibility of missing.

The recording, reproducing apparatus of a fixed head system having two tape running directions of the forward direction and the backward direction normally divides the magnetic tape into two regions of the upper half and the lower half portion, decides the recording region so that the region of the upper half of the magnetic tape may be used in, for example, the recording of the forward direction, the backward direction, and the half region may be used in the recording of the backward direction. The two recording regions are called respectively A face, B face, the B face is called a reverse face with respect to the A face, or the A face is called the reverse face with respect to the B face.

The above described problem point 2 will be described hereinafter in further detail.

As the head crosses obliquely the recoding track in the case of R - DAT so long as the head speed is not changed in proportion to the tape speed, the control data is not always read for every track. Thus, the read out area of the R - DAT is determined to record continuously by 300 frames. Although the head does not obliquely cross in the case of the S - DAT, the bit rate of the reproduction signal changes in proportion to the changes in the tape speech, so that the bit rate changes considerably during the climbing operation of the tape speed and the extraction of the reproduction clock becomes hard to effect, with a probability of reading the data correctly being lower as compared with that of the normal reproduction time. Therefore, even in the case of the S - DAT, the missing probability is required to be made lower by the longer recording period of the read out area as in the case of the R - DAT.

## SUMMARY OF THE INVENTION

The data recording method and the end searching method of the present invention are to settle the above described problem point 1. Accordingly, an essential object of the present invention is to provide an end search method comprising the steps of inverting the running direction to effect an end searching operation of the reverse face if the continuous recording flag is erected when the read out area has been detected at the end search time, entering into the waiting condition for the connecting recording operation if the continuous recording flag is not erected, searching the recording completion point of the whole tape so that the connection recording operation may be effected, by the erection of the continuous recording flag showing that the recording completion point of the first face and the recording start point of the second face conform to the recording completion point of the first face.

Also, the data recording method of the present invention is to settle the above described problem point 2. The data showing the completion point of the recording is divided into two. One of them is that the long period of recoding operation is effected so that the detection may be simplified even at the high speed searching time, and the other of them is that the recording operation may be effected at the minimum period even in the inversion of the tape running direction.

Another important object of the present invention is to provide a data recording method comprising the steps of defining the recording completion point ID of both the end ID and the read out area ID, starting the recording in the end ID prior to the read out area so that the detection may be simplified even at the high speed search, starting the recording of the read out area ID after the recording completion of the major data, continuing the recording of the end ID and the read out area ID up to the recording completion time point so that the sufficient recording period is retained for the end ID which is the recording completion point information for high speed search use, the read out area ID showing the completion of the major data may be made minimum in the recording period, making compatible the detection reliability at the high speed search time and the reduction in the blank time by the inversion in the running direction.

The read out area of the recording completion point and its subsequent are not recorded at all, so that the recording interruption period to be caused in the inversion may be made shorter. In this case, the end ID recording section length may be decided into a given value so that the recording completion point of the major data may be positively decided. Or it is necessary to positively decide the recording completion point of the major data if the recording completion point and its subsequent are kept non-recorded by the provision of the address in the end ID section.

The connection recording method of the present invention settles a problem to be caused when the above described data recording method has been used. If the connection recording tries to be effected through the erasure of the end ID when the end ID is recorded prior to the recording completion point of the major data, there is a problem that one portion of the major data is erased. The connection recording method of the present invention starts the recording of the auxiliary data from the frame where the end ID changes from the ineffective to the effective when the end ID has changed into the effective from the ineffective prior to the recording completion of the major data, records both the auxiliary data and the major data from the next frame to the frame of the recording completion of the major data so that the major data of the portion with the end ID being written may not be erased.

## BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a block diagram showing the construction of a recording, reproducing apparatus for realizing a data recording method, an end searching method, a connection recording method in a first embodiment of the present invention;

Fig. 2 is a control data layout chart in a case where the continuous recording on both the faces in the first embodiment of the present invention has been effected;

Fig. 3 is a control data layout chart in a case where the discontinuous recording on both the faces in the first embodiment of the present invention;

Fig. 4 is a control data layout chart when the recording of the A face only has been effected in the first embodiment of the present invention;

Fig. 5 is a flow chart showing a procedure of a data recording method in the first embodiment of the present invention;

Fig. 6 is a flow chart showing the procedures of an end searching method and a connection recording method in a first embodiment of the present invention;

Fig. 7 is a block chart showing the construction of a recording, reproducing apparatus for realizing a data recording method, an end searching method and a connection recording method in a second embodiment of the present invention;

Fig. 8 is a flow chart showing a procedure of a data recording method in the second embodiment of the present invention;

Fig. 9 is a flow chart showing the procedures of an end searching method and a connection recording method in a second embodiment of the present invention;

Fig. 10 is a block diagram showing one embodiment of the construction of a memory;

Fig. 11 is a chart showing recording track patterns on a tape recorded by the recording head in the first embodiment of the present invention;

Fig. 12 is a flow chart showing the procedure of a data recording method in a third embodiment of the present invention; and

Fig. 13 is a control data layout chart in a case where the continuous recording of both the faces in the third embodiment of the present invention has been effected.

## DETAILED DESCRIPTION OF THE INVENTION

Before the description of the present invention proceeds, it is to be noted that like parts are designated by like reference numerals throughout the accompanying drawings.

Referring now to the drawings, there is shown in Fig. 1, a block diagram showing the construction of a recording, reproducing apparatus for realizing a data recording method, an end search method, a connection recording method in a first embodiment of the present invention.

In Fig. 1, a cassette 101 accommodates a magnetic tape secured at both the ends thereof on the reel hub. A mechanism control portion 102 controls the running operation of the magnetic tape in accordance with the instructions of the system control portion 105 so as to feed to a system control portion 105 the information as to whether or not the magnetic tape has come near the end into the system control portion 105. The recording and reproducing head 103 effects the recording, reproducing operations with respect to the magnetic tape. The recording head is composed of nine heads. One of the heads records the auxiliary data for recording the control data or the like to be used for the reproducing control, and the remaining eight heads record the main data such as audio data and so on. Also, the reproducing head is composed of nine heads. One of the heads reproduces the auxiliary data for reproducing the control data and so on to be used for the reproduction control, and the remaining eight heads produce the major data such as audio data and so on. In the present embodiment, the magnetic tape is divided into two upper, lower areas, one of them is used for the recording in the forward direction, and the other thereof is used for the recording in the reverse direction. When the running direction is reversed, the head is rotated by 180 degrees. Fig. 11 shows the record track patterns on the tape recorded by the recording head in the first embodiment of the present invention.

The recording, reproducing portion 104 adds an error correction code to the input audio data and the auxiliary data to be used for the running control or the like to be given from the system control portion 105 so as to modulate it and output it to the recording and reproducing head 103 as a recording signal, and also, modules the reproduction signal reproduced from the recording and reproducing head 103, effects the error corrections to output the output audio data, and also, extracts the auxiliary data so as to send it to the system control portion 105.

The system control portion 105 instructs a running mode with respect to the mechanism control portion 102, and instructs a recording mode, a reproducing mode or the like with respect to the recording, reproducing portion 104. The system control portion 105 can be realized by a microprocessor and so on

The recording, reproducing mode setting portion 106 gives an instruction with respect to the system control portion 105 by the user. The user instructs an approximate operation form such as recording, reproducing, repetitive reproducing or the like by the use of the recording, reproducing mode setting portion 106 to be composed of switches and so on.

Although the audio data are used in the present embodiment in the inputs, outputs of the recording, reproducing apparatus, the other data such as image data or the like may be used. Generally, they are called the major data with respect to the auxiliary data to be used for controlling operation.

The data recording method, the end searching method, and the connection recording method in a first embodiment of the present invention will be described hereinafter.

When the user instructs a both face continuous recording operation, to effect the recording continuously, for example, from the A face to the B face, the end ID is recorded by twelve frames immediately before the completion point of the recording of the A face, the recording of the read out area ID starts as a continuous record flag CF = 1 showing that the continuation thereof is recorded onto the B face after the recording completion of the major data, the recording is completed after the four frame recording operation, the running direction of the tape is reversed, the lead in area showing the start of the recording is recorded, thereafter the reading of the major data starts.

When the user instructs the both face discontinuous recording, for example, in order to effect the quick forwarding as far as the trailing end of the A face to effect the inverting operation after the completion of the recording of the A face so as to record continuously onto the B face, the recording of the end ID starts immediately before the completion point of the recording of the A face so as to effect twelve frame recording. After the recording completion of the major data, the recording of the read out area ID is started as the continuous record flag CF = 0. After the four frame recording, the recording is completed so as to effect the quick forwarding operation as far as the trailing end of the A face.

When the user instructs the single face recording, for example, in order to complete the recording on the A face only, the recording of the end ID is started immediately before the completion point of the recording of the A face to effect the twelve frame recording. Then, after the recording completion of the major data, the recording of the read out area ID is started as the continuous recording flag CF = 0. After the four frame recoding has been effected, the recording is completed.

At the reproduction time, the recording completion point is detected by the read out area ID during the A face reproduction. At the continuous recording flag CF = 1 showing that the continuous recording is effected on the B face at this time, the inversion is adapted to be effected immediately so as to effect the reproduction of the B face. When the user already instructs the both face reproduction at the continuous recording flag CF = 0, the recording completion point is detected, the quick forwarding is effected immediately as far as the trailing end of the A face. After the inverting operation, the B face is reproduced. When the user already instructs the single face reproduction, the rewinding operation is to be immediately effected towards the leading end of the A face.

When the end ID and the continuous recording flag are detected at the end searching time, the mode is moved from the high speed search mode to the stop mode to start the search in the opposite direction so as to detect the end ID. But when the continuous recording flag is ineffective, the mode is moved from the high speed search mode to the reproduction mode. When the read out area ID has been detected, the rewinding reproduction is effected, the rising frame of the end ID and the read output area ID are stored to come to a stop. If the user instructs the connection recording thereafter, the connection connection is effected with the use of the information of the rising frame of the end ID and the read out area ID stored.

Fig. 2, Fig. 3 and Fig. 4 show a control data layout charts showing the record results of the control data on the tape in the first embodiment of the present invention.

Fig. 2 is a control data layout chart in a case where the continuous recording of both the faces has been effected. Fig. 3 is a control data layout chart in a case where the discontinuous recording of both the faces has been effected. Fig. 4 is a control data layout chart when the reading of the A face only has been effected.

Fig. 2 is a control data layout chart, wherein the read in area of the four frames is recorded from the leading end of the A face, thereafter a program area for recording the major data is formed, then the end ID is raised immediately before the recording completion point of the major data, the continuous recording flag CF is raised after the recording of the twelve frames, the read out area is formed by four frames, after the recording completion of the read out area the inverting operation is effected immediately in the running direction so as to record the read in area, thereafter the program area is recorded, then the end ID is raised immediately before the record completion point of the major data with the continuous record flag CF remaining 0, the read out area is formed by four frames with the continuous recording flag CF remaining as 0 after the twelve frame recording operation.

The read in area is provided as a spare period from the start of the tape running operation to the stability thereof, and the read in area ID = 1 is recorded. The program area shows an area where the major data is recorded, the read out area shows an area showing the completion point of the recording, the end ID is also the data showing the completion point of the recording, so that the recording is effected by a period for reading even at the high speed search. The relationship between the read in area ID (LIID) and the read out area ID (LOID) in the read in area, the program area, the lead out area becomes as follows.

Read in area : LIID = 1, LOID = 0

Program area : LIID = 0, LOID = 0

Read out area : LIID = 0, LOID = 1

Fig. 3 is a control data layout chart wherein the read in area is recorded for a constant period from the leading end of the A face, thereafter the program area for recording the major data is formed, then, the end ID is raised immediately before the recording completion point of the major data, the read out area is formed by four frames with the continuous recording flag CF remaining 0 after the recording by twelve frames, the quick forwarding operation is effected towards the trailing end of the A face immediately after the recording completion of the read out area, the running direction is inverted, after the arriving at the trailing end of the A face, to record the read out area by four frames, thereafter the program area is recorded, then the end ID is raised immediately before the recording completion point of the major data, the read out area is formed by four frames with continuous recording flag CF remaining 0 after the recording by twelve frames.

Fig. 4 is a control data layout chart where a read end area is recorded for a given period from the leading end of the A face, thereafter the program area for recording the major data is formed, then the end ID is raised immediately before the recording completion point of the major data, the read out area is formed by four frames after the recording of the twelve frames with the continuous recording flag CF remaining 0.

Fig. 5 shows a flow chart showing a procedure of a data recording method in a first embodiment of the present invention. The processing is effected at a system control 105.

In Fig. 5, reference numeral 501 shows a processing for recording by four frames the read in area from the leading end of the A face. It is to be noted that the frame shows the minimum unit which can be recorded independently on the tape.

Reference numeral 502 shows the processing for recording by one frame the audio data.

Reference numeral 503 shows the processing for branching into a processing 516 when the instruction of the recording completion has come from the recording, reproducing mode setting portion 106, and branching into a processing 504 when the instruction of the recording completion has not come from the recording, reproducing mode setting portion 106. Reference numeral 516 shows the processing for recording by twelve frames the audio data as the end ID, the EID = 1, the continuous recording flag CF=0.

Reference numeral 506 shows the processing by which the lead out area of the end ID, the EID = 1, the continuous recording flag CF = 0 is recorded by four frames so as to complete the recording.

Reference numeral 504 shows the processing for branching into the processing 515 when an instruction for inverting the running direction of the tape from the recoding, reproducing mode setting portion 106, and for branching into the processing 502 when an instruction for inverting the running direction of the tape from the recording, reproducing mode setting portion 106 has not come. Namely, the processings 502, 503 and 504 are repeated unless an instruction for inverting the running direction of the tape from the recording, reproducing mode setting portion 106 or an instruction of the recording completion come.

In the present embodiment, the user is adapted to give the instruction of the inversion in the running direction from the recording, reproducing mode setting portion 106. For example, the instruction of the inversion may be given automatically with the use of the trailing end detecting function by the reader tape, the instruction of the inversion may be given automatically through the detection of the completion point of the tune of the audio data.

Also, in the present embodiment, although the user is adapted to give an instruction of the recording completion from the recording, reproducing mode setting portion 106, the instruction of the recording completion may be issued automatically with the use of the trailing end detection function by, for example, the leader tape or the completion point of the tune in the audio data may be automatically detected so as to issue the recording completion.

Reference numeral 515 shows the processing for recording the audio data by twelve frames as the end ID, the EID = 1, the continuous recording flag CF = 0.

Reference numeral 505 shows the processing for branching into a processing 507 when the instruction of the continuous recording from the recording, reproducing mode setting portion 106 has come, and for branching into the processing 512 when the instruction of the continuous recording from the recording, reproducing mode setting proton 106 has not come.

Reference numeral 507 shows for recording by four frames the read out area of the end ID, the EID = 1, the continuous recording flag CF = 1, the read out area ID, the LOID = 1 when the instruction of the continuous recording has existed.

Reference numeral 508 shows the processing for issuing an instruction of the inversion in the running direction of the tape to the mechanism control portion 102.

Reference numeral 509 shows the processing for recording by four frames the read in area.

Reference numeral 510 shows the processing for recording by one frame the audio data.

Reference numeral 511 shows the processing for branching into a processing 516 when an instruction of the recording completion has come from the recording, reproducing mode setting portion 106, and the instruction of the recording completion from the recording, reproducing mode setting portion 106 has not come.

Reference numeral 512 shows the processing for recording by four frames the read out area of the end ID, the EID = 1, the continuous recording flag CF = 0, the read out area ID (LOID) = 1.

Reference numeral 513 shows the processing for illustrating the instruction of the quick forwarding operation of the tape to the mechanism control portion 102.

Reference numeral 514 shows the processing for branching into a processing 508 when the information of reaching the tape trailing end from the mechanism control portion 102 has come, and for repeating the same processing again when the information of reaching the tape trailing end from the mechanism control portion 102 has not come.

By the procedures described hereinabove, such tape is composed as shown in Fig. 2 when the user has been specified the both face continuous recording, such a tape is composed as shown in Fig. 3 when the user has specified the both face continuous recording, such a tape as shown in Fig. 4 is composed when the user has specified the single face continuous recording.

The time required in the shifting from the A face to the B face when the user has specified the both face continuous recording is 8P + Q wherein 4P is the time for recording by four frames the read out area of the A face, Q is the time for inverting the running direction, 4P is the time for recording the read in area of the B face.

Fig. 6 is a flow chart showing the procedure of the end search method and the connection recording method in the first embodiment of the present invention. The processing is performed by the system control portion 105. Although there is a range specified by the user about the reproduction control, for example, a method of reproducing both the faces or the single face by one time, and a method of effecting the repetitive reproducing method, a case of the repetitive reproducing operation will be described here.

In Fig. 6, reference numeral 618 shows the processing for branching into a processing 600 when the instruction of the reproduction has come from the recording, reproducing mode setting portion 106 so as to start the reproductive processing, and for branching into a processing 611 when the instruction of the reproduction has not come from the recording, reproducing mode setting portion 106 so as to start the end search processing.

Reference numeral 600 shows the processing for instructing the start of the reproducing mode to the mechanism control portion.

Reference numeral 601 shows the processing for branching into the processing 604 when the frame during the reproducing operation at the present time has been in the read in area, and for branching into the processing 602 when the frame during the reproducing operation at the present time has not been in the read in area.

Reference numeral 602 shows the processing for branching into the processing 603 when the frame during the reproducing operation at the present time has been in the program area, and for branching into the processing 605 when the frame during the reproducing operation at the present time has not been in the program area. Namely, the processing shows the branching into the processing 604 when the frame during the reproducing operation at the present time has been in the read in area by the processings 601 and 602, shows the branching into the processing 603 when the frame during the reproduction operation at the present time has been in the program area, and shows the processing 605 when the frame during the reproducing operation at the present time has been in the read out area.

Reference numeral 603 shows the processing for reproducing by one frame the audio data to effect the outputting operation. Reference numeral 604 shows the processing for muting the audio output so as to continue by one frame portion the tape running operation.

Reference numeral 605 shows the processing for branching into the processing 606 when the user has instructed the repetitive reproduction of both the faces through the recording, reproducing mode setting portion 106, and branching into the processing 610 when the user has instructed the repetitive reproduction of the single face through the recording, reproducing mode setting portion 106.

Reference numeral 606 shows the processing for branching into the processing 607 in the continuous recording flag CF = 1 in the read out area, and for branching into the processing 608 at the continuous recording flag CF = 0.

Reference numeral 607 shows the processing for instructing the inversion in the tape running direction to the mechanism control portion 102.

Reference numeral 608 shows the processing for issuing the quick forwarding of the tape to the mechanism control portion 102.

Reference numeral 609 shows the processing for branching into the processing 607 when the information that the tape trailing end has reached from the mechanism control portion 102 comes, and for repeating the same processing again when the information that the tape trailing end has reached from the mechanism control portion 102 does not come.

Reference numeral 610 shows the processing for issuing the rewinding instruction of the tape to the mechanism control portion 102.

Reference numeral 611 shows the processing for issuing a quick forwarding instruction of the tape to the mechanism control portion 102.

Reference numeral 612 shows the processing for branching into the processing 613 when the end ID, the EID = 1 has been detected, and for repeating again the detection when the end Id, the EID = 1 has not been detected.

Reference numeral 613 shows the processing for issuing an instruction of the reproduction mode start to the mechanism control portion 102.

Reference numeral 614 shows the processing for branching into the processing 615 when the frame during the reproducing operation at the present time has been in the read out area, and for repeating again the processing 614 when the frame during the reproducing operation at the represent time has not been in the read out area.

Reference numeral 615 shows the processing for branching into the processing 617 at the continuous recording flag CF = 0 in the read out area, and for branching into the processing 616 at the continuous recording flag CF = 1.

Reference numeral 617 shows the processing for issuing the instruction of the rewinding reproduction of the fourteen frame portions to the mechanism control portion 102.

Reference numeral 616 shows the processing for issuing the instruction of the inversion in the tape running direction to the mechanism control portion 102.

Reference numeral 619 shows the processing for detecting, storing the frame where the end ID has been changed from 0 1 and the frame where the read out area ID has been changed from 0 to 1 during the rewinding reproduction.

Namely, in the case of the CF = 0 at the processing 615, the fourteen frame portion tape is rewound into the waiting condition for the connection recording.

In the case of the CF = 1 at the processing 615, the tape running direction is inverted so as to carry out the processing 611 again. As the condition of the normal CF = 1 comes on either the A face or the B face, it branches to the processing 617 when it passes the processing 615 for the second time, the fourteen frame portion tape is rewound into the waiting condition for the connection recording. When the recording is not carried out normally because of some causes, and it passes processing 615 three times or more considering a case of the CF = 1 in both the read out area of the A face, the B face, a protection for stopping the processing may be provided.

Reference numeral 620 shows the processing for branching into the processing 621 when the user has instructed the connection recording start through the recording, repeating mode setting portion 106, and for repeating again the same processing when the connection recording start has not been instructed.

Reference numeral 621 shows the processing for branching into the processing 622 when the frame during the reproducing operation at the present time is a frame before the frame where the end ID has been changed from 0 to 1, and for repeating again the same processing when the frame during the reproducing operation at the present time is not a frame before the frame where the end ID has been changed from 0 to 1.

Reference numeral 622 is the processing for branching into the processing 623 when the frame during the reproducing operation at the present time is a frame before the frame where the read out area ID has changed from 0 to 1, and for branching into the processing 624 when the frame during the reproducing operation at the present time is not a frame before the frame where the read out area ID has been changed from 0 to 1.

Reference numeral 624 shows the processing for instructing the recording only the auxiliary data to the mechanism control portion 102 and the recording, reproducing portion 104.

Reference numeral 623 shows the processing for instructing the recording of the auxiliary data and the audio data to the mechanical control portion 102 and the recording, reproducing portion 104.

When the user has specified both face repetitive reproduction by such a procedure as described hereinabove, the inversion is immediately effected in the read out area at the continuous recording flag CF = 1, the quick forwarding operation starts in the lead out area at the continuous start flag CF = 0. The inversion is effected since the tape trailing end is reached, and the rewinding starts in the read out area when the user has instructed the single face repetitive reproduction. The inversion is effected since the the tape leading end is reached so as to start the reproduction.

Also, when the user has instructed the end search, the end ID is detected to move to the reproduction mode. When the lead out area has been read, the inversion is effected immediately at the lead out area in the continuous recording flag CF = 1 so as to effect the end search on the reverse face. In the continuous reproducing flag CF = 0, the condition becomes the waiting condition of the connection recording.

As the end ID is recorded for the section of the eighteen frame portion with respect to the four frames of the lead out area section, the probability of missing the end ID is lower.

Also, when the user has instructed the connection recording after the end search, the audio data is recorded for the section from the rising of the end ID to the rising of the read out area ID, so that the audio data is adapted not to be erased with the auxiliary data only being adapted to be rewritten. The frame from the rising of the read out area ID records both the auxiliary data and the audio data.

A second embodiment of the present invention will be described hereinafter with reference to the drawings.

In the characteristics of the second embodiment of the present invention, when the inversion has been caused during the recording operation by the use of the memory, the read out area ID is recorded after the recording completion point, and also, the information during the recording interruption is kept stored. The read out area ID is recorded after the completion of the inversion, and thereafter the reproduction data is read out from the memory and is recorded.

At the reproduction time, the reproduction data is sequentially stored. The data stored already in the memory, instead of the data reproduced from the tape when the detection has been effected in the read out area ID. The continuous reproduction may be effected by the fetching start, into the memory, of the reproduction data reproduced from the tape after the completion of the read in area ID area.

As the conventional method of effecting the endless reproduction in the recording, reproducing apparatus having two running directions, there is a method of detecting the tape trailing end by a tape remaining amount detection means for detecting the tape remaining amount through the revolution number of the reel base FG, inverting the running direction of the tape so as to effect the endless reproduction ("Digital Signal Recording, Reproducing Apparatus" disclosed in Japanese Open Patent Publication No. 59 - 54012 issued March 28, 1984 by the Japan Patent Agency)

But the information in the recording completion point of the A face and the recording start point of the B face are adapted not to be recorded on the tape by the use of such identification information of the read out area ID in the conventional art, with a problem that the data of the A face and the B face was not connected correctly.

In order to solve the problem point, there is a data recording method of a second embodiment of the present invention.

Fig. 7 is a block diagram showing the construction of the recoding, reproducing apparatus for realizing the data recording method of the second embodiment of the present invention. As the components from 101 to 106 are similar to that of Fig. 1 of the first embodiment of the present invention, the description thereof is omitted here.

In Fig. 7, reference numeral 107 is a memory for storing the input audio data and the output audio data. The memory 107 functions as a first in • first out • memory about each of the input audio data and the output audio data. Namely, when the range stays within the range of the storage capacity of the memory if the transfer rate of the audio data varies by the tape running stop or the like, the audio data may inputted, outputted without overs and shorts. Also, the memory 107 is controlled by the system control portion 105.

Fig. 10 is a block diagram showing one embodiment of the construction of the memory 107.

In Fig. 10, reference numeral 1001 is a first in first out memory (FIFO), wherein the input data DIN of 8 bit width is stored by a storing clock WCK, the output data DOUT of the 8 bit width is read by the reading clock RCK. The first in first out memory 1001 becomes empty when resetting operation is effected by the reset signal RST. Thereafter, the input data DIN is stored each time the storing clock WCK is inputted. Assume that the capacity of the first in first out memory 1001 may be stored up to 64 bytes if, for example, it is assumed to be 64 bytes. As for the reading, the data of 64 bytes can be read continuously with the 64 bytes being storing. Also, the first in first out memory 1001 outputs a reading enable signal OR which becomes effective when the data of 1 byte or more which are not read yet in the memory exits, becomes ineffective when the memory is empty, and a writing enable signal IR which becomes ineffective when the data of 64 bytes are stored in the memory, the new data cannot be stored further, effective when the storing of the new data becomes possible to store. For example, the first in first out memory such as SN74LS222 and so on to sell by, for example, Texas•Instrument Company has the same functions although it is different from the first in first out memory of the present embodiment in the memory capacity and the input, output data width.

Reference numeral 1002 is an and gate to gate with a storing clock enable signal WCKEN to be supplied from the interface portion 1004 a clock TWCK to be fed from the timing generating portion 1005.

Reference numeral 1003 is an and gate to gate with a reading clock enable signal RCkEN to be fed from the interface portion 1004 the clock TRCK to be fed from the timing generating portion 1005.

Reference Numeral 1004 is an interface portion which generates a storing clock enable signal WCKEN, a reading clock enable signal RCKEN and a resetting signal RST in accordance with the memory control signal MCNT to be fed from the system control portion 105, generates a memory condition signal MSTAT in accordance with a reading enable signal OR and a storing enable signal IR to be fed from the first in first out memory 1001 so as to feed it to a system control portion 105.

Reference numeral 1005 is a timing generating portion for generating clocks TWCK and TRCK which become the source of the writing clock WCK and the reading clock RCK.

A data recording method in the second embodiment of the present invention will be described hereinafter.

Fig. 8 is a flow chart showing a procedure of a data recording method in a second embodiment of the present invention. The processing is effected by a system control portion 105.

In Fig. 8, reference numeral 801 shows the processing for recording by four frames the read out area from the leading end of the A face. Reference numeral 802 shows the processing for giving to the memory 107 the instruction of the storing and reading start of the input audio data into the memory 107. At this time, the data stored is immediately read.

Reference numeral 803 shows the processing for recording by one frame the audio data.

Reference numeral 804 shows the processing for branching into the processing 813 when an instruction of inverting the running direction of the tape from the recording, reproducing mode setting portion 106 has come, and for branching into the processing 803 when an instruction of inverting the running direction of the tape from the recording, reproducing mode setting portion 106 has not come. Namely, the processings 803 and 804 are repeated unless an instruction of inverting the running direction of the tape from the recording, reproducing mode setting portion 106 comes.

In the present embodiment, although the user is adapted to issue an instruction of inverting the running direction from the recording, reproducing mode setting portion 106, for example, an automatically inverting instruction may be issued with the use of the trailing end detection function by the reader tape, an inversion instruction may be automatically issued by the detection of the completion point of the tune in the audio data.

Reference numeral 813 shows the processing for recording by twelve frames the audio data as the end ID, the EID = 1, the continuous recording flag CF = 0.

Reference numeral 805 shows the processing for instructing the stop of the output of the input audio data stored from the memory 107 with respect to the memory 107. At this time, the storing operation of the input audio data is continued.

Reference numeral 806 shows the processing for recording by four frames the end ID, the EID = 1, the continuous recording flag CF = 1, the read out area ID, the LOID = 1.

Reference numeral 807 shows the processing for issuing the instruction of inversion in the running direction of the tape to the mechanism control potion 102.

Reference numeral 808 shows the processing for recording by four frames the read in area.

Reference numeral 809 shows the processing for issuing the instruction of the reading resumption of the input audio data stored with respect to the memory 107.

Reference numeral 810 shows the processing for recording by one frame the audio data.

Reference numeral 811 shows the processing for branching into the processing 814 when an instruction of the recording completion from the recording, reproducing mode setting portion 106, and for branching into the processing 810 when an instruction of the recording completion from the recording, reproducing mode setting portion 106 has not come.

In the present embodiment, although the user is adapted to issue an instruction of the recording completion from the recording, reproducing mode setting portion 106, for example, an instruction of the recording completion may be automatically issued with the use of the trailing end detection function by the reader tape, and an instruction of the recording completion may be automatically issued by the detection of the completion point of the tune in the audio data.

Reference numeral 814 shows the processing for recording by twelve frames the audio data as the end ID, the EID = 1, the continuous recording flag CF = 0.

Reference numeral 812 shows the processing for recording by four frames the read out area of the end ID, the EID = 1, the continuous recording flag CF = 0, the read out area ID (LOID) = 1.

By such a procedure as described hereinabove, such tape as shown in Fig. 2 is made, the audio data is completed by the final frame of the program area of the A face, and is connected with the first frame of the program area of the B face. The input audio data are all recorded on the tape.

The time required from the A face to the B face becomes 8P + Q, wherein 4P is the time for recording by four frames the read out area of the A face, Q is the time for inverting the running direction, 4P is the time for recording the read in area of the B face.

Fig. 9 is a flow chart showing the procedure of the end search method and the connection recording method in the second embodiment of the present invention. This processing is effected in the system control portion 105. Although there are a method of reproducing one time the range specified by the user and a method of effecting the repetitive reproduction about the reproduction control, here a case will be described where the reproduction starts at the A face, and the reproduction is completed with the B face.

In Fig. 9, reference numeral 920 shows the processing for branching into the processing 900 when an instruction of reproduction from the recording, reproducing mode setting portion 106 has come so as to start the reproducing processing, and for branching into the processing 913 when an instruction of the reproduction from the recording, reproducing mode setting portion 106 has not come so as to start the end search processing.

Reference numeral 900 shows the processing for instructing the start of the reproduction mode to the mechanism control portion 102.

Reference numeral 901 shows the processing for repeating the same processing when a frame during the reproducing operation at the present time is in the read in area, branching into the processing 902 when the frame during the reproducing operation at the present time has not been in the read in area.

Reference numeral 902 shows the processing for branching into the processing 903 when the frame during the reproducing operation at the present time has been in the program area, and for branching into the processing 907 when the frame during the reproducing operation at the present time has not been in the program area. Namely, when the frame during the reproducing operation at the present time has been in the read in area by the processing 901 and the processing 902, it is branched into the processing 901, when the frame during reproducing operation at the present time has been in the program area, it is branched into the processing 903, when the frame during the reproducing operation at the present time has been in the read out area, it is branched into the processing 907.

Reference numeral 903 shows the processing for reproducing by one frame portion the audio data.

Reference numeral 904 shows the processing for starting the storing to the memory 107 of the audio data reproduced. Also, when the storing into the memory 107 of the audio data has been started, the storing operation into the memory 107 of the audio data is continued.

Reference numeral 905 shows the processing for effecting the processing 906 when the reference numeral 107 is filled with the audio data which has not been read yet, namely, at the time of the storing enable signal IR = 0, and for effecting the processing 901 when the memory 107 is not filled with the reproduction data which has not been read yet, namely at the time of storing enable signal IR = 1.

Reference numeral 906 shows the processing for starting the reading of the audio data stored in the memory 107. When the reading of the audio data stored in the memory 107 is started, the reading of the audio data continues.

If the processing up to the processings 901 through 906 are arranged, the reading is not effected before the memory 107 takes in the audio data of T second portion from the start of the reproduction at the program area of the A face. After the taking in of the T second portion of data, the storing of the reproduction data and the reading of the data of the T second before are adapted to be effected in parallel. This is effected to usually keep in reserve the T second portion of audio data till the inversion is caused so as to continue the output of the audio data even during the reproduction non-enable period in the inversion of the running direction of the tape.

Reference numeral 907 shows the processing for stopping the storing to the memory 107 of the audio data.

Reference numeral 908 shows the processing for branching into the processing 909 at the time of continuous reproducing flag CF = 1 in the read out area, and branching into the processing 910 at the continuous recording flag CF = 0.

Reference numeral 909 shows the processing for issuing an instruction of the inversion of the tape running direction to the mechanism control portion 102.

Reference numeral 910 shows the processing for reading the audio data from the memory 107 till the memory 107 becomes empty, namely, becomes the reading enable signal OR = 0.

The processing 911 shows the processing for stopping the reading of the audio data after the completion of the processing 910.

The processing 912 shows the processing for issuing the instruction of the tape running stop to the mechanism control portion 102. Namely, in the continuous recording flag CF = 0 in the read out area of the A face, the data of the T second portion reserved in the memory 107 is sequentially outputted by the processings 910 through 912 and then, comes to a stop.

On the other hand, when the running direction of the tape is inverted by the processing 909 to move to the reproduction of the B face, the processing 901 is effected again. The processings 901 through 903 are carried out similarly as in the reproduction of the A face. In the processing 904, the storing to the memory 107 of the audio data is resumed. Assume that the time taken before the storing into the memory 107 of the audio data is resumed in the processing 904 during the reproducing processing of the B face from the storing stop into the memory 107 of the audio data in the processing 907 during the reproduction processing of the A face is U seconds, and the storing of the reproduction data and the reading of the data of (T - U) seconds before are adapted to be effected in parallel at the reproduction time of the B face. Accordingly, the decision result of the processing 905 becomes No (negative) and is branched into the processing 901. But as the reading of the audio data is not stopped, the continuing operation is effected till the read out area of the B face comes.

Namely, during the reproduction of the program area of the A face, the storing of the audio data reproduced and the reading of the audio data of T seconds before from the memory 107 are effected in parallel. For the U seconds from the completion of the reproduction of the program area of the A face to the U second to the start of the reproduction of the program area of the B face, the audio data stored in the memory 107 is sequentially read. After the start of the reproduction of the program area of the B face, the storing of the reproduction audio data and the reading of the data of the (T-U) second before are to be effected in parallel.

Reference numeral 913 shows the processing for issuing an instruction of the tape quick forwarding to the mechanical control portion 102.

Reference numeral 914 shows the processing for branching into the processing 915 at the detection of the end ID, the EID = 1, and for repeating the detection again when the end ID, the EID = 1 have not been detected.

Reference numeral 915 shows the processing for issuing the instruction of the start of the reproduction mode to the mechanism control portion 102.

Reference numeral 916 shows the processing for branching into the processing 917 when the frame during the reproducing operation at the present time has been in the read out area, and for repeating again the processing 916 when the frame during the reproducing operation at the present time has not been in the read out area.

Reference numeral 917 shows the processing for branching into the processing 919 at the continuous recording flag CF = 0 in the read out area, and for branching into the processing 918 at the time of the continuous recording flag CF = 1.

Reference numeral 919 shows the processing for issuing the instruction of the rewinding reproduction of the fourteen frame portion to the mechanism control portion.

Reference numeral 918 shows the processing for issuing the instruction of the inversion in the tape running direction to the mechanism control portion 102.

Reference numeral 921 shows the processing for detecting, storing a frame where the end ID has changed from 0 to 1, and a frame where the read out area ID has changed from 0 to 1 during the rewinding reproduction.

Namely, in the case of the CF = 0 at the processing 917, the fourteen frame portion tape is rewound into the waiting condition for connection recording.

On the other hand, in the case of the CF = 1 at the processing 917, the tape running direction is inverted to effect the processing 913 again. As the condition of the CF = 1 appears normally on either A face or B face, it is branched into the processing 919 when it passes through the processing 917 for the second time, and the fourteen frame portion of tape is rewound into the waiting condition for the connection recording operation. When it has passed through the processing 917 three times or more, considering a case of the CF = 1 in the read out area of both the A face and the B face, without the proper recording operation because of some causes, a protection of stopping the processing may be provided.

Reference numeral 922 shows the processing for branching into the processing 923 when the user has instructed the connection record start through the recording, reproducing mode setting portion 106, and for repeating the same processing again when the connection record start has not been instructed.

Reference numeral 923 shows the processing for branching into the processing 924 when the frame during the reproducing operation at the present time is a frame before the frame where the end ID has changed from 0 to 1 in the end ID, and for returning the same processing again when it is not a frame before a frame where the end ID has changed from 0 to 1.

Reference numeral 924 shows the processing for branching into the processing 925 when the frame during the reproducing operation at the present time is a frame before the frame where the read out area ID has changed from 0 to 1 and for branching into the processing 926 when the frame during the reproducing operation at the present time is not a frame before the frame where the read out area ID has changed from 0 to 1.

Reference numeral 926 shows the processing for instructing the recording of the auxiliary data only to the mechanism control portion 102 and the recording, reproducing portion 104.

Reference numeral 925 shows the processing for instructing the recording of the auxiliary data and the audio data to the mechanism control portion 102 and the recording, reproducing portion 104.

When the user has specified the continuous reproduction of the A face, B face continuous reproduction by such procedure as described hereinabove, the audio may be reproduced endlessly even during the shifting from the A face to the B face.

Also, assume that the capacity of the memory 107 is T seconds, the time from the completion of the final frame of the read out area of a certain face to the start of the first frame of the program area of the other face is U seconds, and such restriction as in the following equation is provided in the frequency N which can be continuously reproduced repetitively when the continuous recording flag is a case of the CF = 1 in the read out area on both the faces.

$$N < T / U \qquad \ldots\ldots (1)$$

There is not a restriction to the frequency N where the continuous reproduction may be repetitively effected in a case where the continuous recording flag is CF = 0 in the read out area of either of the faces.

As the controlling may be effected so that the audio data of the T second portion may be normally kept stored in the memory 107 if the tape speed is made faster than the normal speed during the recording, reproducing operation, there is not such a restriction as in the (1) equation in the number of times N in which the continuous reproduction may be repetitively effected even in a case where the continuous recording flag is CF = 1 in the read out area on both the faces.

If the end ID is detected when the user has specified the end search, and if the continuous recording flag = 1 when it has been moved to the reproduction mode, the inversion is effected immediately in the read out area, and the end searching is effected on the reverse face. In the continuous recording flag = 0, the condition becomes the waiting condition for the connection recording.

As the end ID is recorded at this time for the sector of sixteen frame portion with respect to the four frames of the read out area section, the probability of missing the end ID is lower.

Also, when the user instructed the connection recording after the end searching, the audio data is recorded for a section from the rising of the end ID to the rising of the lead out area ID, so that only the auxiliary data is adapted to be rewritten, and the audio data is adapted not to be erased. The frame from the rising of the read out area ID records both the auxiliary data and the audio data.

A data recording method, an end search method and a connection recording method in a third embodiment of the present invention will be described hereinafter.

Fig. 12 is a flow chart showing a procedure of the data recording method in the third embodiment of the present invention. The processing is carried out in the system control portion 105.

In Fig. 12, reference numeral 501 shows the processing for recording by four frames the read out area from the leading edge of the A face. It is to be noted that the frame shows a minimum unit which can be recorded independently on the tape.

Reference numeral 502 shows the processing for recording by one frame the audio data.

Reference numeral 503 shows the processing for branching into the processing 1203 when the instruction of the recording completion has come from the recording, reproducing mode setting portion 106, and for branching into the processing 504 when the instruction of the recording completion has not come from the recording, reproducing mode setting portion 106.

Reference numeral 1203 shows the processing for recording by sixteen frames the read out area of the end ID, the EID = 1, the continuous recording flag CF = 0 so as to complete the recording.

Reference numeral 504 shows the processing for branching into the processing 505 when an instruction for inverting the running direction of the tape from the recording, reproducing mode setting portion 106, and for branching into the processing 502 when an instruction of inverting the running direction of the tape from the recording, reproducing mode setting portion 106 has not come. Namely, the processings 502 through 504 are repeated if an instruction of inverting the running direction of the tape from the recording, reproducing mode setting portion 106 or an instruction of the record completion does not come.

Reference numeral 505 shows the processing for branching into the processing 1201 when the instruction of the continuous recording from the recording, reproducing mode setting portion 106 has come, and for branching into the processing 1202 when an instruction of the continuous recording has not come from the recording, reproducing mode setting portion 106.

Reference numeral 1201 shows the processing for recording by twelve frames the audio data as the end ID, the EID = I, the continuous recording flag CF = 0 when the instruction of the continuous recording has issued.

Reference numeral 507 shows the processing for recording by four frames the read out area of the end ID, the EID = 1, the continuous recording flag CF = 1, the read out area ID, LOID = I.

Reference numeral 508 shows the processing for issuing an instruction of the inversion of the running direction tape to the mechanism control portion 102.

Reference numeral 509 shows the processing for recording by four frames the read in area.

Reference numeral 510 shows the processing for recording by one frame the audio data.

Reference numeral 511 shows the processing for branching into the processing 1203 when an instruction of the recording completion has come from the recording, reproducing mode setting portion 106, and for branching into the processing 510 when an instruction of the recording completion has not come from the recording, reproducing mode setting portion 106.

Reference numeral 1202 shows the processing for recording by sixteen frames the read out area of the end ID, EID = 1, the continuous recording flag CF = 0, the read out area ID, the LOID = 1 when the continuous recording instruction has not come.

Reference numeral 513 shows the processing for issuing the instruction of the quick forwarding of the tape to the mechanism control portion 102.

Reference numeral 514 shows the processing for branching into the processing 508 when the information that it has reached to the type trailing end from the mechanism control portion 102 comes, and for repeating the same processing again when the information that it has reached to the tape trailing end from the mechanism control portion 102 does not come.

As a result, such control data as shown in Fig. 13 is recorded on the tape.

Fig. 13 is a control data layout chart in a case where the continuous recording on both the faces in the third embodiment of the present invention has been effected.

Accordingly, when the running direction is inverted to continue onto the reverse face to effect the recording, the end ID is raised prior to the read out area, and when the recording is completed on the face, the end ID is raised at the same time at the start of the read out area.

In this case, when the automatic end searching explained by the use of Fig. 6 has been effected in the first embodiment of the present invention, the read out area for completing the recording on the face, namely, the read out area where the end ID rises at the same time with the start of the read out area is to be searched.

In Fig. 6, when the end searching starts from the A face, the continuous recording flag CF is detected by the processing 615 to inverse the running direction by the processing 616 into the end search of the B face. When the processing 615 is effected again, the processing 617 and the processing 619 are effected into the waiting condition of the connection recording, because the continuous flag CF is not erected.

When an instruction of the connection recording is issued from the recording, reproducing operation mode setting portion 106, the processing 621 is effected. In the case of the tape recorded by the use of the data recording method in the present embodiment, the end ID and the read out area ID rise at the same time, so that the processing 622 is effected, thus branching to the processing 623. Namely, the recording of the audio data and the recording of the auxiliary data are adapted to start when the instruction of the connection recording is issued.

In a case of data recording method of a first embodiment of the present invention, the recording of the new audio data cannot start immediately if the instruction of the connection recording is issued in the section where the audio data is recorded from the rising of the end ID to the read out area, because the end ID is made ineffective by the rewriting of the auxiliary data only, and the audio data is controlled not to be erased. In the case of the present embodiment, more time is required at the recording time so as to write the sufficient length of read out area from the completion of the audio data at the recording completion time, but in the connection recording, the recording of the audio data may be started immediately if the instruction of the connection recording is issued, so that the head cutting is not caused in a case where the recording is desired to be effected in emergency as the recording of the audio data can be started immediately if an instruction of the connection recording is issued.

As is clear from the foregoing description, in the data recording method, an end search method, and a connection recording method of the present invention, at the recording time, the end ID is changed from the ineffective to the effective before the recording completion point. At the same time with the above described end ID being changed from the ineffective to the effective, or after the above described end ID is changed from the ineffective to the effective, the recording of the major data is interrupted so as to make the read out area ID effective from the ineffective. The continuous recording flag is made effective in the section where the above described read out area ID of at least a first face is effective when the recording completion point of the first face is in conformity with the recording start point of the second face. At the end search time, the read out area is reproduced at the detection of the end ID. The rewinding reproduction is effected, when the continuous recording flag is not detected, so as to store a frame where the end ID has been changed from the ineffective to the effective, and a frame where the read out area ID has been changed from the ineffective to the effective, or only a frame where the read out area ID has been changed from the ineffective to the effective. The running direction is inverted so as to effect end search at the detection of the continuous recording flag. At the connection recording time, the recording of the auxiliary data is started from the frame where the end ID is changed from the ineffective to the effective when the end ID has been changed from the ineffective to the effective earlier than the read out area ID so as to record both the auxiliary data and the major data from the frame where the variation is effected from the ineffective of the read out area ID to the effective so as to start the end search of the reverse face by the immediate inversion when the continuous recording flag has been detected at the section of the read out area ID = 1 after the detection of the end ID at the end searching time. The rising frames of the end ID and the rising frame of the read out area ID are stored by the rewinding reproduction when the continuous recording flag has not been detected in the section of the read out area ID = 1 for entering into the waiting condition for the connection recording, so that the recording completion point of the whole tape may be automatically searched.

As the end ID recording section may be made longer than the recording section of the read out area and the continuous recording flag, the recording section of the end ID may be made sufficiently longer so that the missing probability of the end ID at the end search time may be made lower, and also, the recording section of the read out area is made sufficiently shorter in the inversion of the running direction at the recording time so that the recording interruption period to be caused in the inversion may be made shorter.

In the embodiment of the data recording method of the present invention, a method of making the recording interruption period to be caused in the inversion shorter has been described through the shorter recording period of the lead out area ID and the continuous recording flag showing the continuity from the A face to the B face showing the completion of the major data in each face, and the recording interruption period to be caused in the inversion may be made much shorter by the non-recording of the read out area of the recording completion point and its subsequent. In this case, the end ID recording section length is determined to the constant value so that the recording completion point of the major data may be definitely decided, or the recording completion point of the major data is required to be positively decided if the recording completion point and its subsequent of the major data is non-recorded by the provision of the address into the end ID section. Also, in this case, the continuous recording flag has only to be recorded in the section the same as the end ID, instead of the read out area.

When the recording section of the end ID is longer than the recording section of the read out area and the continuous recording flag at the connection recording time, the section from the rising of the end ID to the rising of the read out area ID may realize the connection recording without the erasure of the major data written up to the front of the read out area by the rewriting of only the auxiliary data.

Also, the data recording method of the present invention changes from the ineffective to the effective the end ID before the recording completion point, when the recording completion point of the first face is in conformity with the recording starting point of the second face, and changes the read out area ID from the ineffective to the effective after the above described end ID has become effective and also, makes the continuous recording flag effective in a section where at least the above described read out area ID of the first face stands. When the recording completion point of the first face is not in conformity with the recording starting point of the second face, the end ID and the read out read ID are adapted to be changed from the ineffective to the effective at the same time before the recording completion point. When the recording operation is effected continuously onto the reverse face by the inversion of the running direction, namely, when the continuous recording flag is erected, the end ID is raised prior to the read out area so as to make shorter the time from the completion of the major data recording to the recording end of the read out area. When the recording is completed with the face, namely, when the continuous recording flag is not erected, the end ID is adapted to be erected at the same time with the start of the read out area. When the connection recording is effected with the continuous recording flag corresponding to the recording completion point at the whole tape being provided as a guide, the major data and the auxiliary data are adapted to be recorded at the same time from the starting point of the read out area, so that the recording of the major data may be started immediately if the instruction of the connection recording is issued.

Although the present invention has been fully described by way of example with reference to the accompanying drawings, it is to be noted here that various changes and modifications will be apparent to those skilled in the art. Therefore, unless otherwise such changes and the modifications depart from the scope of the present invention, they should be constructed as included therein.

## Claims

1. A data recording method comprising a step of changing from the ineffective to the effective an ID showing the recording completion point of the major data prior to a recording completion point in the recording of the major data on a recording medium.

2. A data recording method comprising the steps of changing from the ineffective to the effective an end ID showing the recording completion point of the major data of the above described forward direction recording region or the backward direction recording region prior to the recording completion portion of the above described major data of the above described forward direction recording region when the recording medium is divided into two recoding regions of the forward direction recording region and the backward forward recording region by a recording apparatus having two forward, backward running directions so as to record the major data, also changing from the ineffective to the effective the continuous recording flag at the same time with the above described end ID when the recording of the major data is continuous with the above described backward direction recording region.

3. A data recording method comprising the steps of changing from the ineffective to the effective the end ID showing the recording completion point of the major data prior to the recording completion point of the above described major data in the recording of the major data on the recording medium, changing from the ineffective to the effective the read out area ID at the same time or after the change thereof.

4. A data recording method comprising the steps of changing from the ineffective to the effective an end ID showing the recording completion point of the major data of the above described forward direction recording region or the backward direction recording region prior to the recording completion portion of the above described major data of the above described forward direction recording region when the recording medium is divided into two recording regions of the forward direction recording region and the backward forward recording region by a recording apparatus having two forward and backward running directions, making the continuous recording flag effective in a section where the above described read out area ID of at least the forward direction recording region is effective, when the recording of the major data is interrupted at the same time or after the change thereof, the read out area ID showing the recording completion point of the major data is changed from the ineffective to the effective, the recording of the above described major data is continuous with the above described backward direction recording region.

**5.** A data recording method comprising the steps of changing form the ineffective to the effective the end ID prior to the recording completion point of the major data of the above described forward direction recording region in the recording of the major data when the recording medium is divided into two recording regions of the positive direction recording region and the backward direction recording region by a recording apparatus having two forward, backward running directions, with the recording of the above described major data of the above described forward direction recording region being continuous with the above described backward direction recording region, changing from the ineffective to the effective the read out area ID at the recording completion point of the major data after the above described end ID has become effective, making the continuous recording flag effective in a section where at least the above described read out area ID is erected, changing the above described end ID and the above described read out area ID from the ineffective to the effective at the same time prior to the recording completion point of the major data of the above described forward direction recording region or the above described backward direction recoding region in a case except for it.

**6.** A data recording method comprising the steps of changing from the ineffective to the effective the end ID prior to the recording completion point of the major data of the above described forward recording region when the recording, reproducing mode setting portion has instructed the inversion and the continuous recording in the recording operation of the major data by the division of the recording medium into two recording regions of the forward direction recording region and the backward direction recording region by a recording apparatus having two forward, backward running directions, interrupting the recording of the major data at the same time or after the changing of the above described end ID, storing the major data into the memory, changing from the ineffective to the effective of the read out area ID and the continuous recording flag, switching the running direction of the above described recording apparatus at a time point when the recording of the above described read out area ID, the above described end ID, the above described continuous recording flag has been completed, recording the read in area on the above described backward direction recording region, thereafter reading, recording sequentially the above described major data stored in the above described memory at a period of S seconds from the interruption of the recording of the above described major data from the above described memory to the recording completion of the above described read interior, storing the new major data, thereafter sequentially effecting the recoding of the new major data and the reading of the major data S seconds before.

**7.** A connection recording method comprising the steps of detecting a frame where the above described end ID changes from the ineffective to the effective when the connection recording is effected on the trailing end of the recording region where the end ID changes from the ineffective to the ineffective prior to the recording completion frame of the major data, starting the recording of the auxiliary data from the frame where the above described end ID changes from the ineffective to the effective, recording both the auxiliary data and the major data from the next frame of the recording completion frame of the above described major data.

**8.** A connection recording method comprising the steps of detecting a frame where the above described end ID changes from the ineffective to the effective and a frame where the read out area ID changes from the ineffective to the effective when the above described end ID changes form the ineffective to the effective when the connection recording is effected on the trailing end of the recording region when the end ID changes from the ineffective to the effective prior to the recording completion frame of the major data, starting the recording of the auxiliary data from the frame where the above described end ID changes to the effective from the ineffective, recording both the auxiliary data and the major data from a frame where the above described read out area ID changes from the ineffective to the effective.

9. An end searching method comprising the steps of completing the end searching when the end ID has been detected, when the continuous recording flag has not been detected in the end ID searching, inverting the running direction to effect the end searching again when the continuous recording flag has been detected.

10. An end searching method comprising the steps of reproducing a read out area when the end ID has been detected in the end ID searching, effecting the rewinding reproduction when the continuous recording flag has not been detected, storing in the memory a frame where the above described end ID has changed to the effective to the ineffective, and a frame where the above described read out area ID has changed from the ineffective to the effective or only a frame where the read out area ID has changed from the ineffective to the effective, inverting the running direction so as to effect the end search when the continuous recording flag has been detected.

Fig. 1

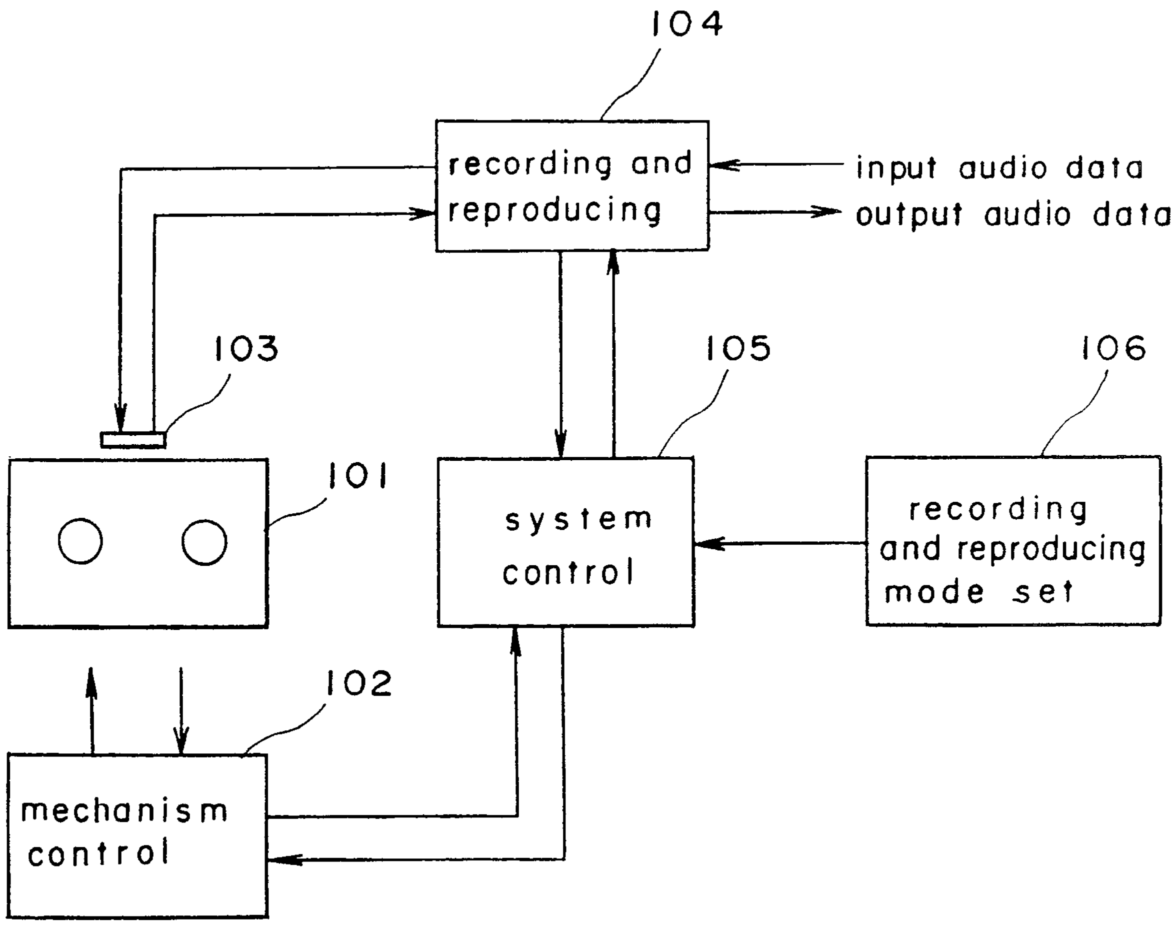
104
recording and reproducing
input audio data
output audio data
103
105
106
101
system control
recording and reproducing mode set
102
mechanism control

*Fig. 2*

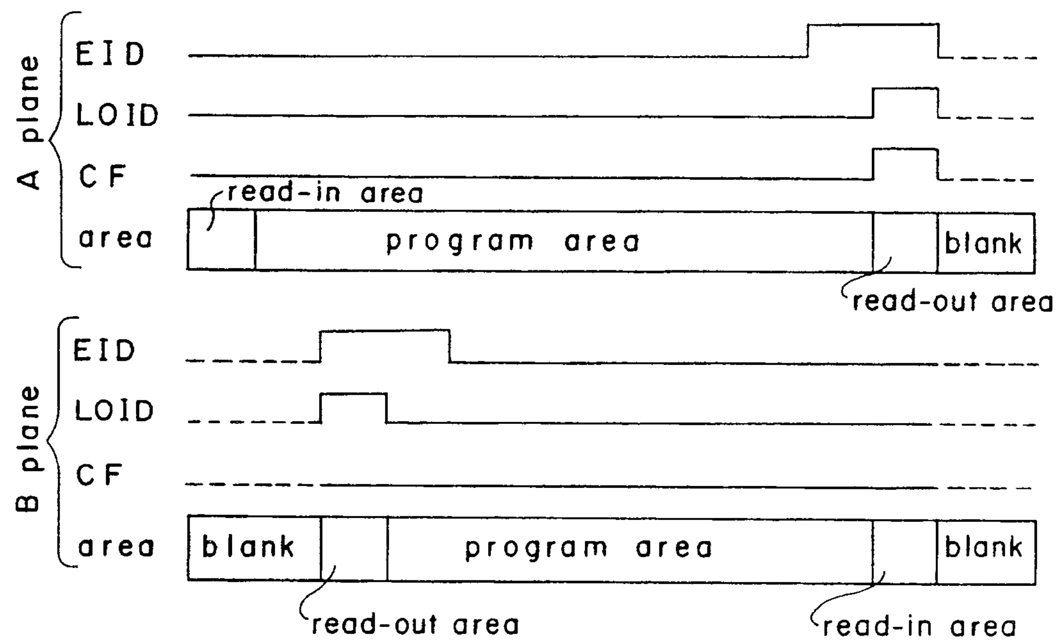
A plane
EID
LOID
CF
area
read-in area
program area
blank
read-out area
B plane
EID
LOID
CF
area
blank
program area
blank
read-out area
read-in area

*Fig. 3*

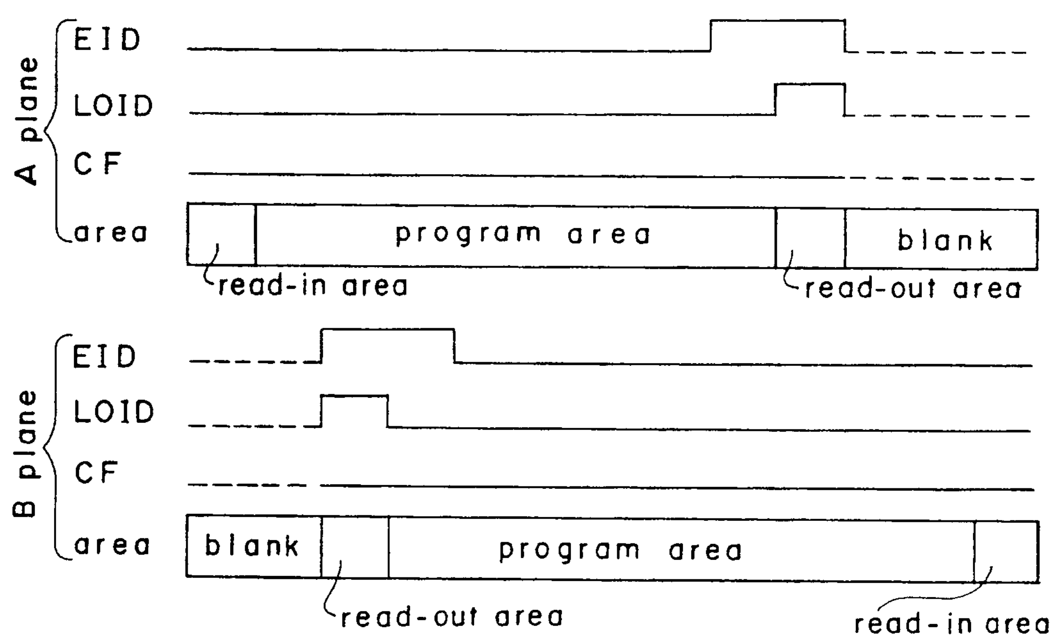
A plane
EID
LOID
CF
area
program area
blank
read-in area
read-out area
B plane
EID
LOID
CF
area
blank
program area
read-out area
read-in area

Fig. 4

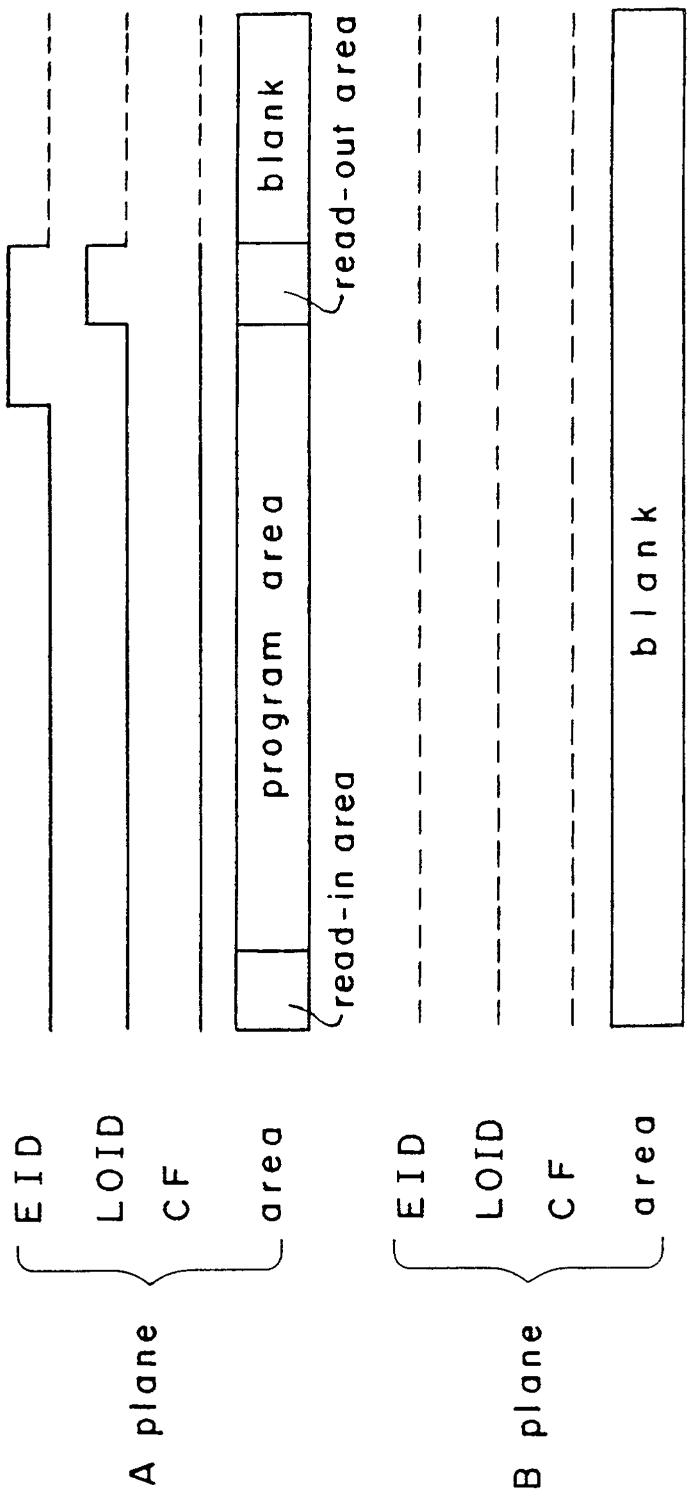
A plane
EID
LOID
CF
area
read-in area
program area
read-out area
blank
B plane
EID
LOID
CF
area
blank

Fig. 5

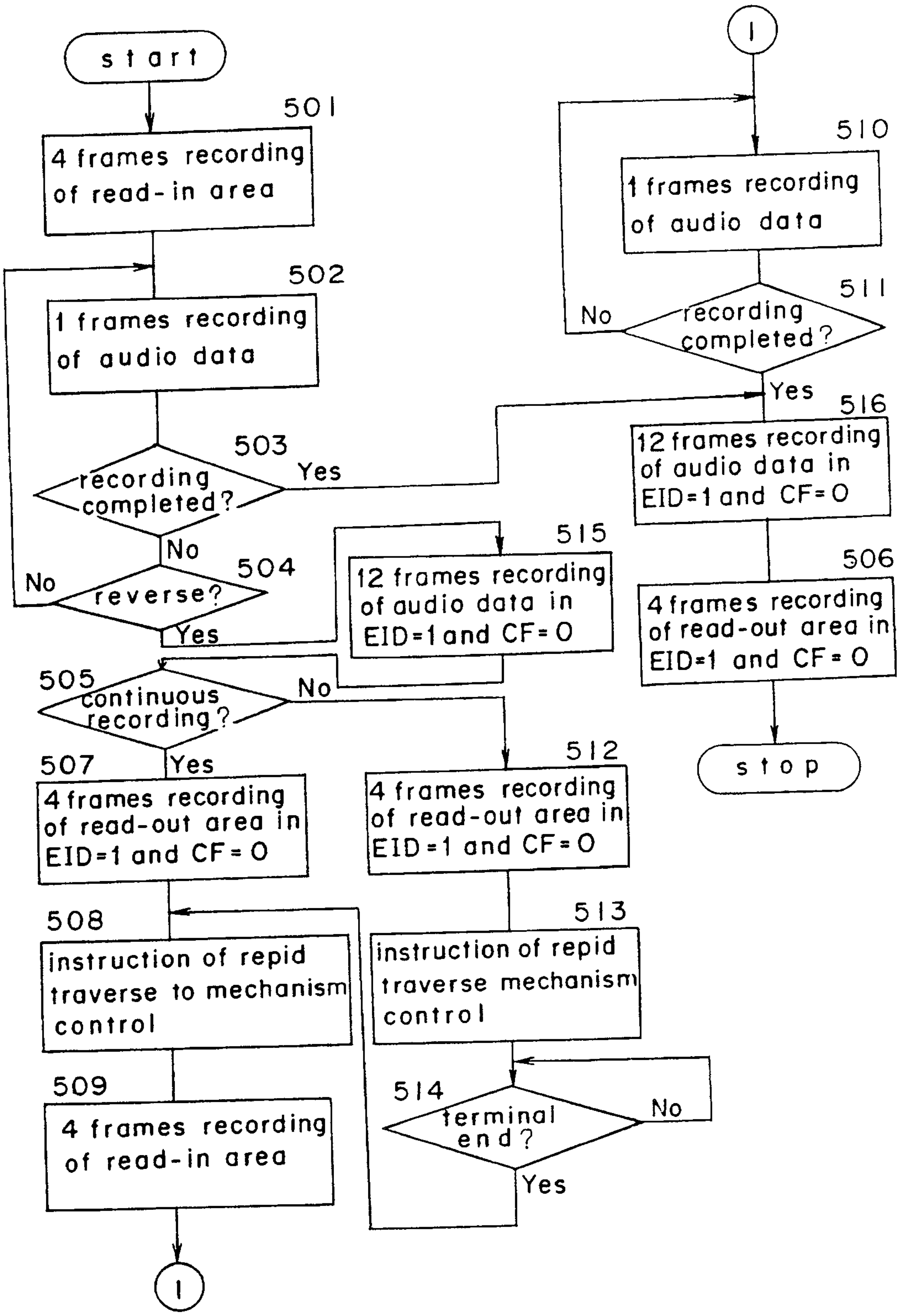
start
501
4 frames recording of read-in area
502
1 frames recording of audio data
503
recording completed?
Yes
No
504
reverse?
No
Yes
505
continuous recording?
No
Yes
507
4 frames recording of read-out area in EID=1 and CF=0
508
instruction of repid traverse to mechanism control
509
4 frames recording of read-in area
1
515
12 frames recording of audio data in EID=1 and CF=0
512
4 frames recording of read-out area in EID=1 and CF=0
513
instruction of repid traverse mechanism control
514
terminal end?
No
Yes
1
510
1 frames recording of audio data
511
recording completed?
No
Yes
516
12 frames recording of audio data in EID=1 and CF=0
506
4 frames recording of read-out area in EID=1 and CF=0
stop

Fig. 6 (a)

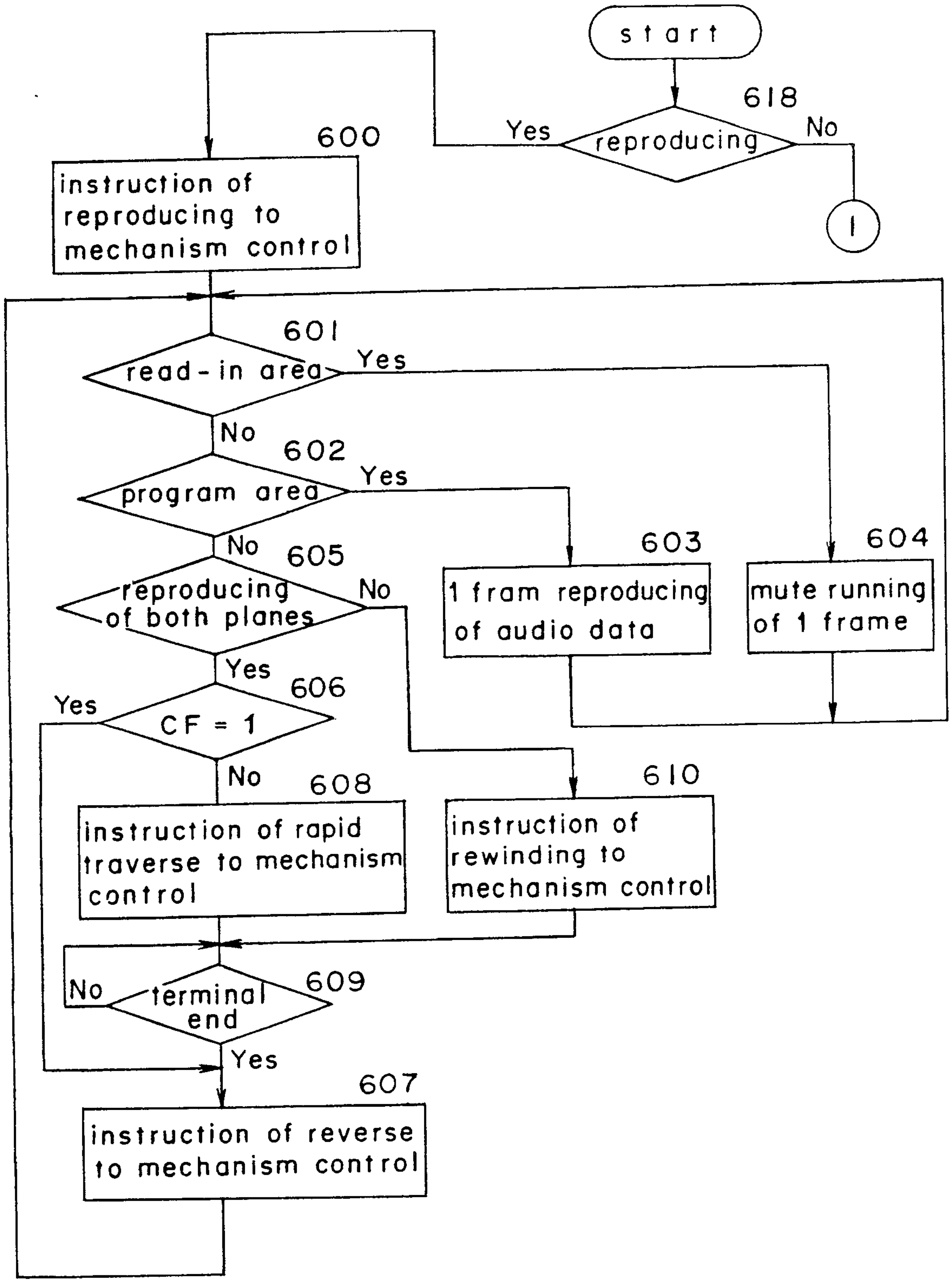
start
618
reproducing
Yes
No
1
600
instruction of reproducing to mechanism control
601
read-in area
Yes
No
602
program area
Yes
No
605
reproducing of both planes
No
Yes
603
1 fram reproducing of audio data
604
mute running of 1 frame
606
CF = 1
Yes
No
608
instruction of rapid traverse to mechanism control
610
instruction of rewinding to mechanism control
609
terminal end
No
Yes
607
instruction of reverse to mechanism control

Fig. 6(b)

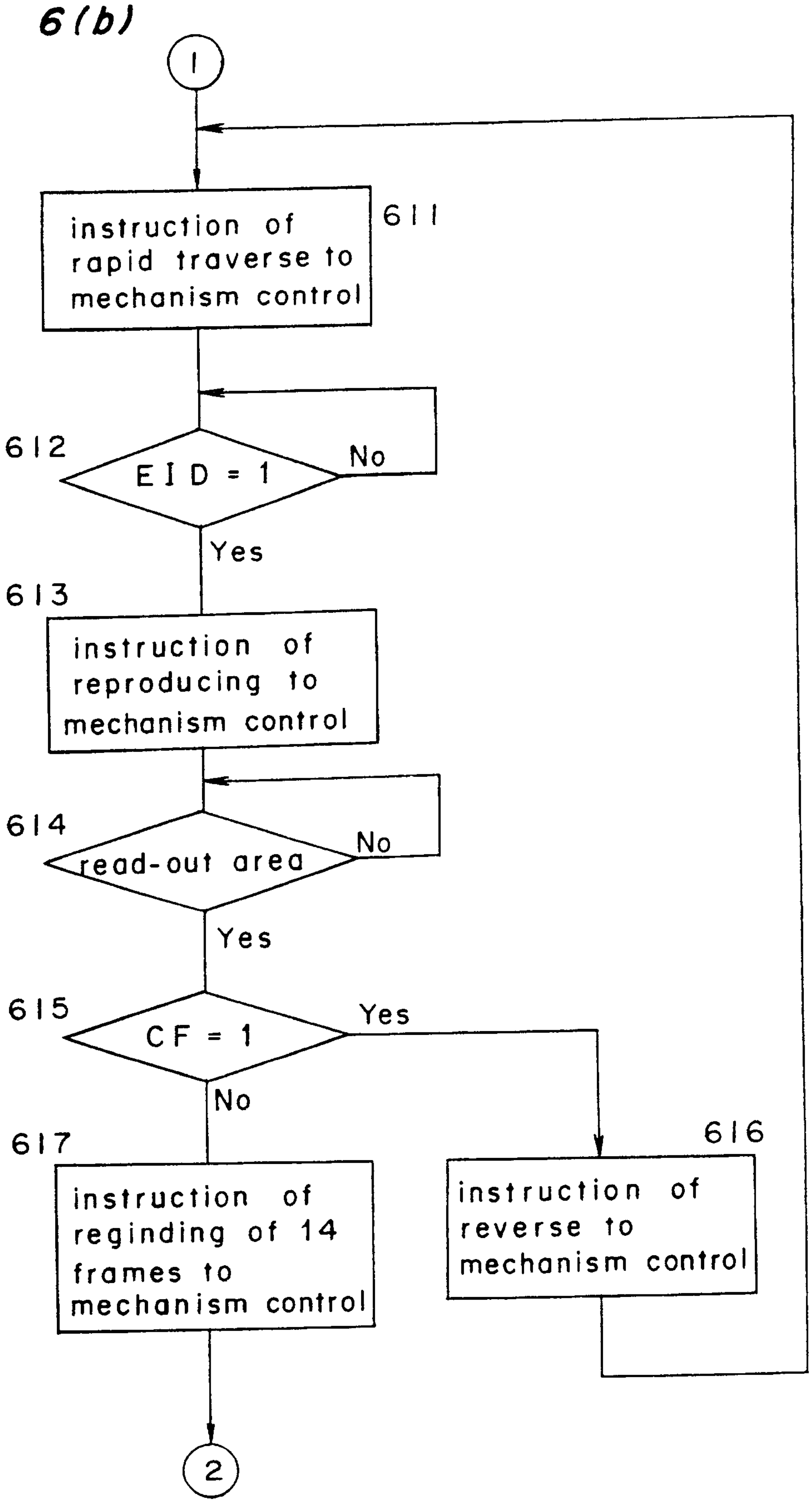
1
instruction of rapid traverse to mechanism control
611
612
EID = 1
No
Yes
613
instruction of reproducing to mechanism control
614
read-out area
No
Yes
615
CF = 1
Yes
No
617
instruction of reginding of 14 frames to mechanism control
616
instruction of reverse to mechanism control
2

*Fig. 6(c)*

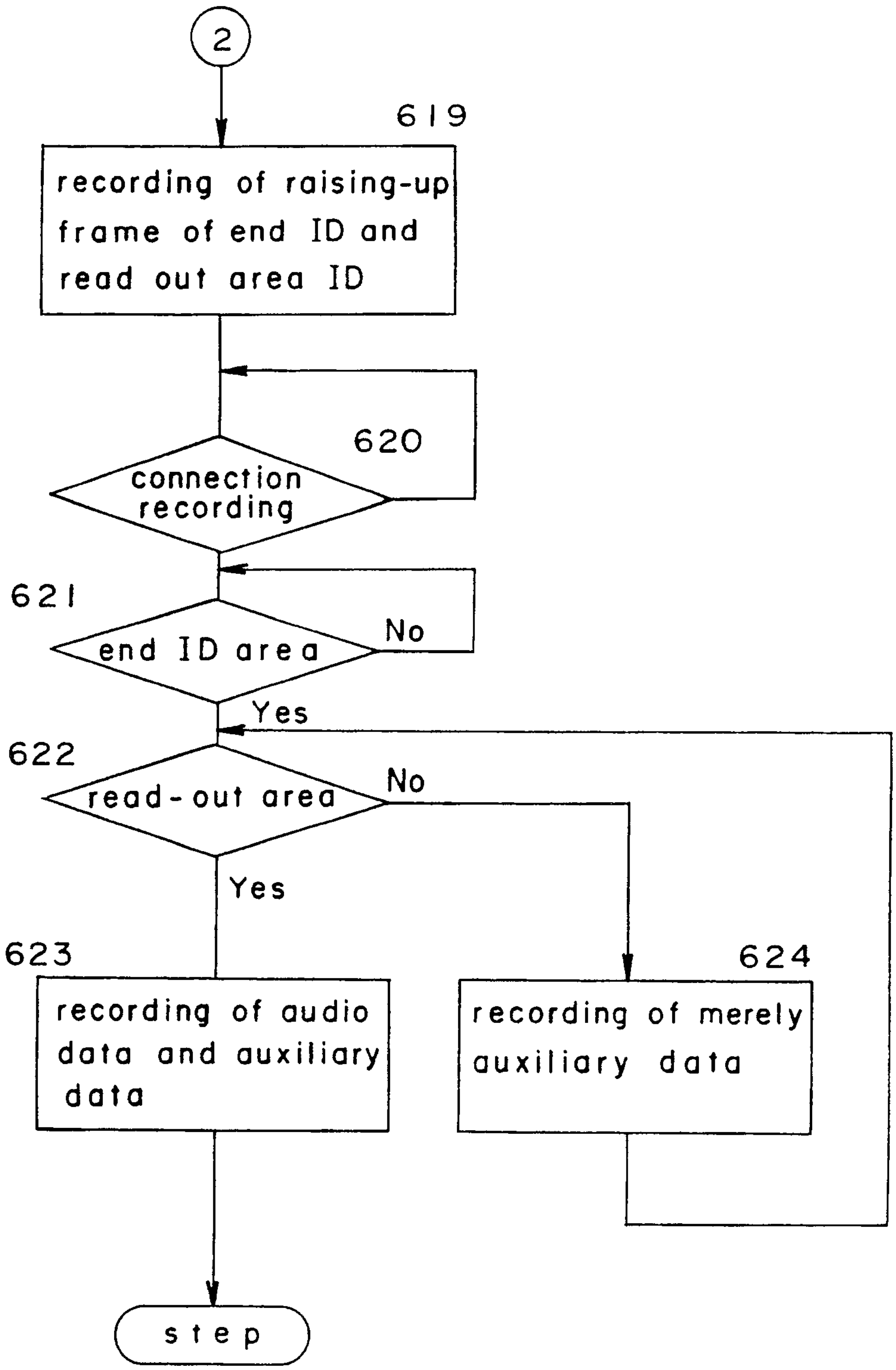
2
619
recording of raising-up frame of end ID and read out area ID
620
connection recording
621
end ID area
No
Yes
622
read-out area
No
Yes
623
recording of audio data and auxiliary data
624
recording of merely auxiliary data
step

Fig. 7

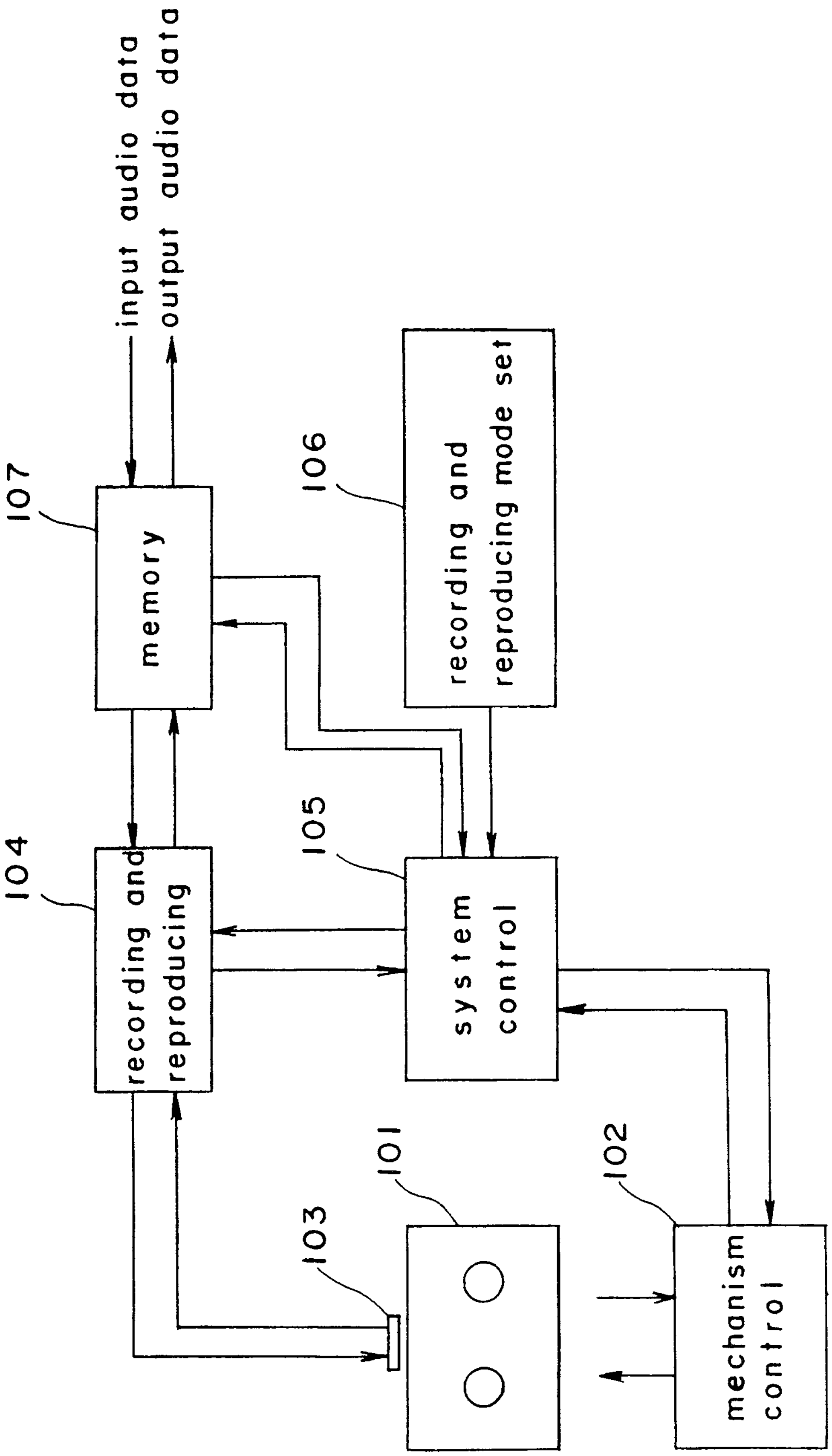
input audio data
output audio data
107
memory
106
recording and reproducing mode set
104
recording and reproducing
105
system control
101
102
103
mechanism control

Fig. 8

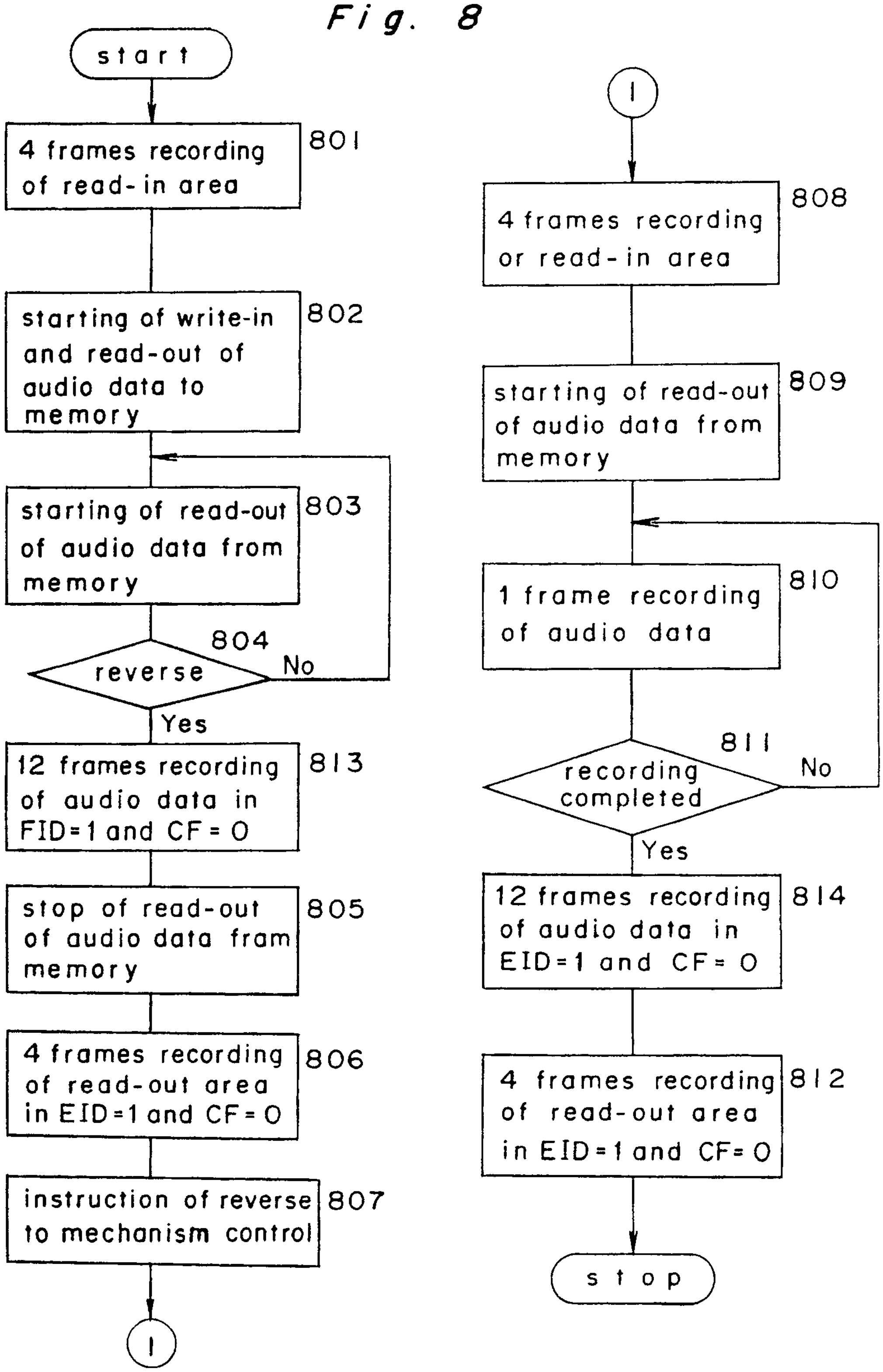
start
4 frames recording of read-in area
801
starting of write-in and read-out of audio data to memory
802
starting of read-out of audio data from memory
803
804
reverse
No
Yes
12 frames recording of audio data in FID=1 and CF=0
813
stop of read-out of audio data fram memory
805
4 frames recording of read-out area in EID=1 and CF=0
806
instruction of reverse to mechanism control
807
I
I
4 frames recording or read-in area
808
starting of read-out of audio data from memory
809
1 frame recording of audio data
810
811
recording completed
No
Yes
12 frames recording of audio data in EID=1 and CF=0
814
4 frames recording of read-out area in EID=1 and CF=0
812
stop

*Fig. 9(a)*

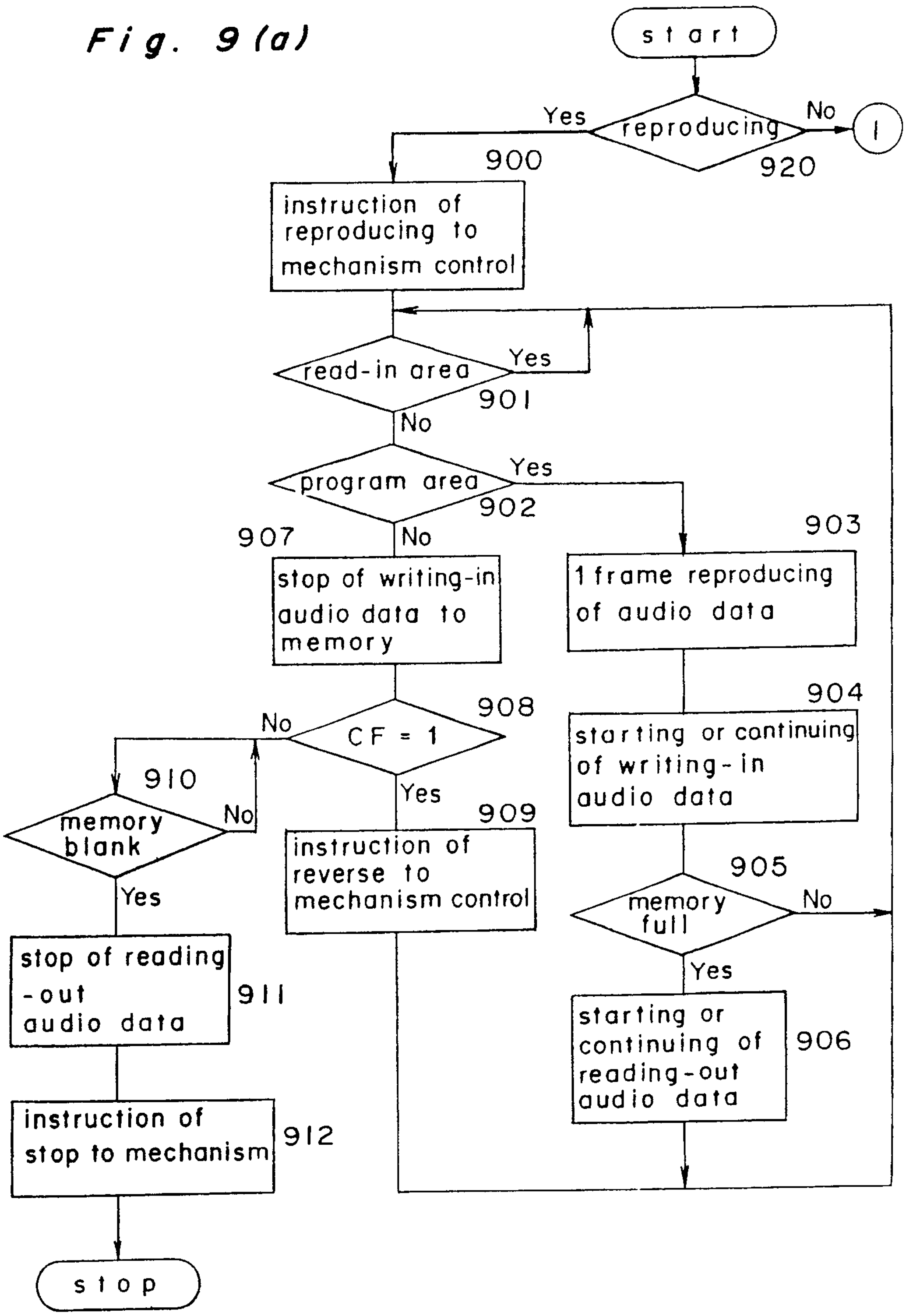
start
reproducing
920
Yes
No
I
900
instruction of reproducing to mechanism control
read-in area
901
Yes
No
program area
902
Yes
No
903
1 frame reproducing of audio data
907
stop of writing-in audio data to memory
904
starting or continuing of writing-in audio data
CF = 1
908
No
Yes
905
memory full
No
Yes
910
memory blank
No
Yes
909
instruction of reverse to mechanism control
906
starting or continuing of reading-out audio data
911
stop of reading-out audio data
912
instruction of stop to mechanism
stop

*Fig. 9 (b)*

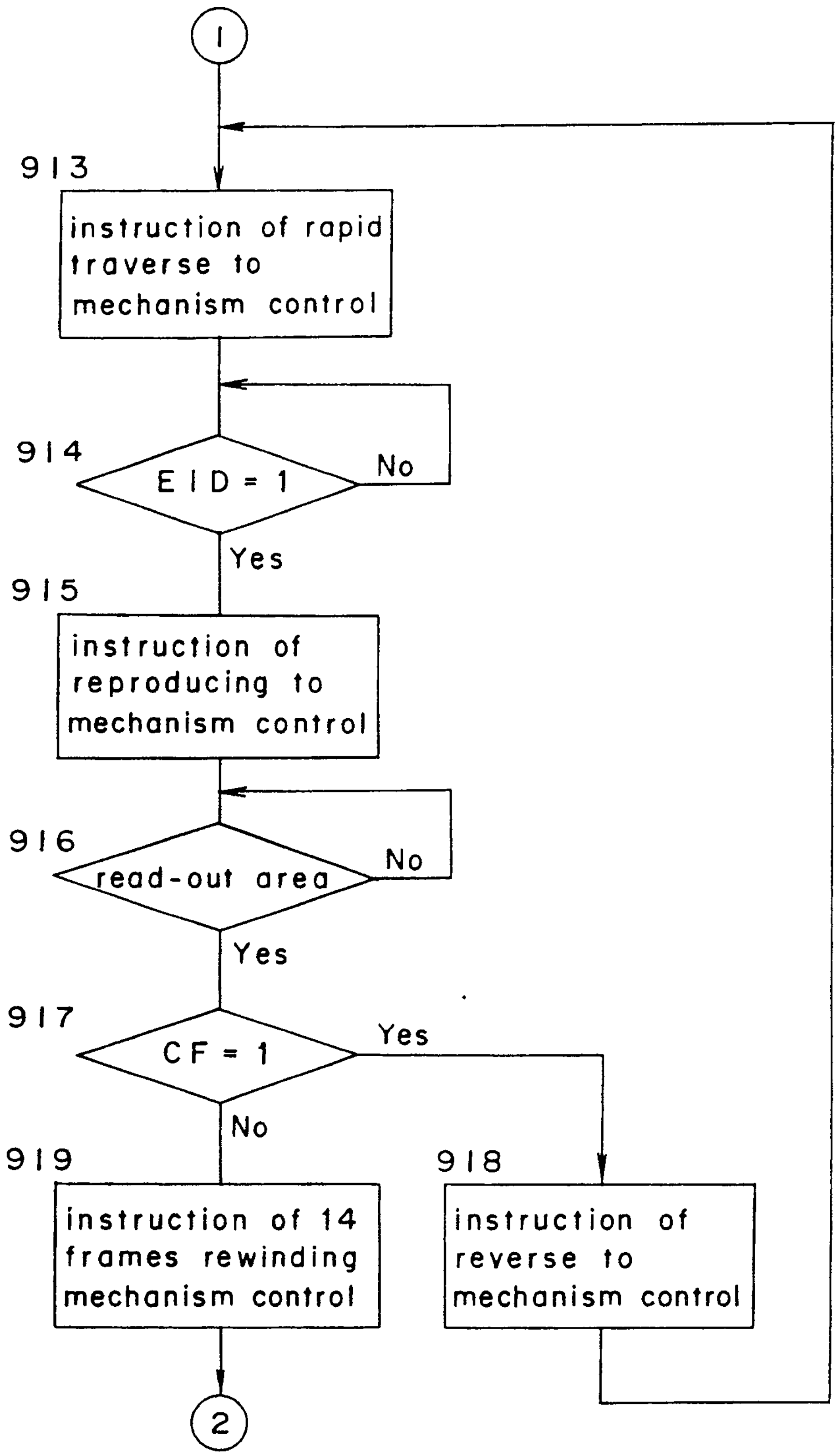
1
913
instruction of rapid traverse to mechanism control
914
EID = 1
No
Yes
915
instruction of reproducing to mechanism control
916
read-out area
No
Yes
917
CF = 1
Yes
No
919
instruction of 14 frames rewinding mechanism control
918
instruction of reverse to mechanism control
2

*Fig. 9(c)*

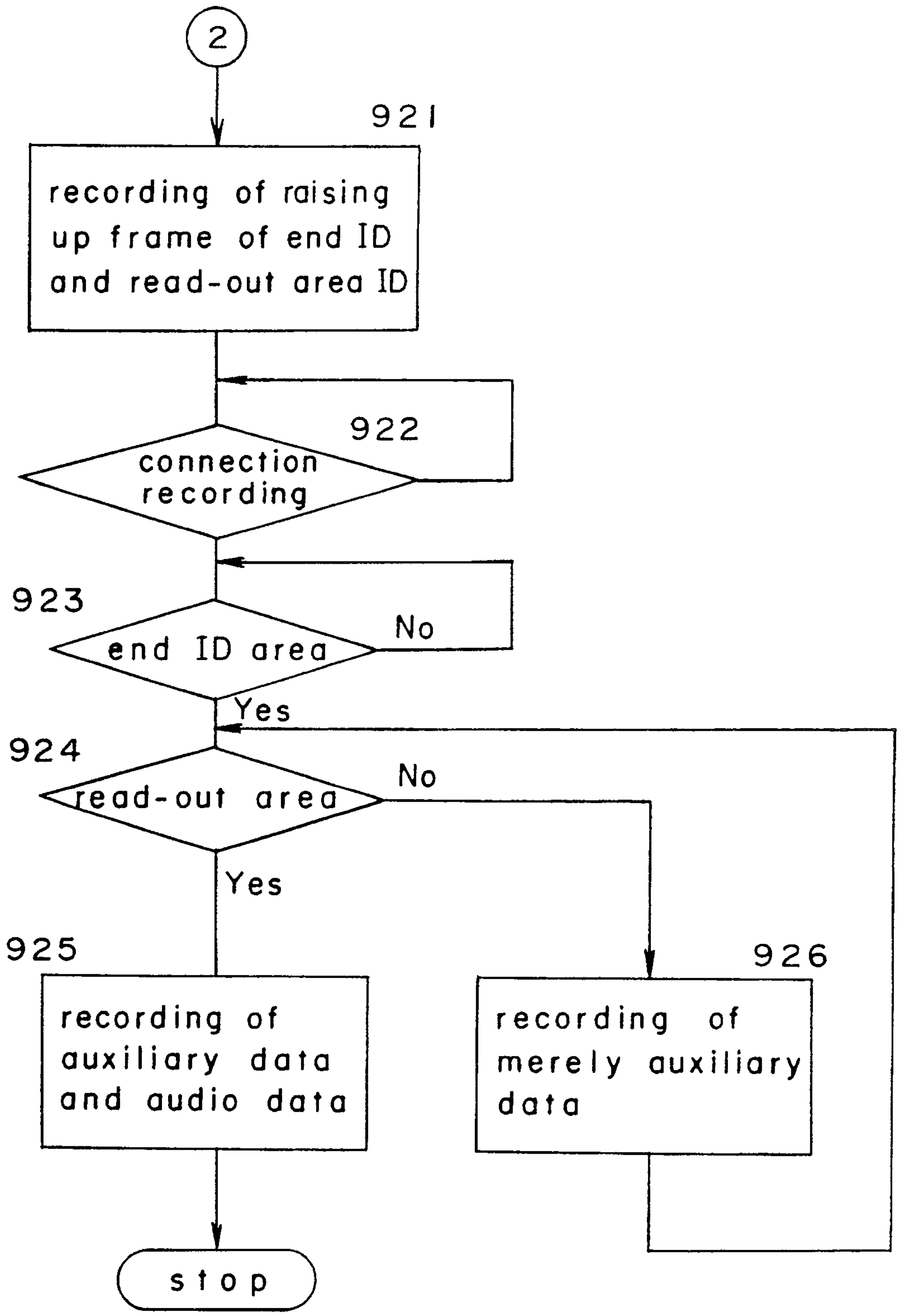
2
921
recording of raising up frame of end ID and read-out area ID
922
connection recording
923
end ID area
No
Yes
924
read-out area
No
Yes
925
recording of auxiliary data and audio data
926
recording of merely auxiliary data
stop

*Fig. 10*

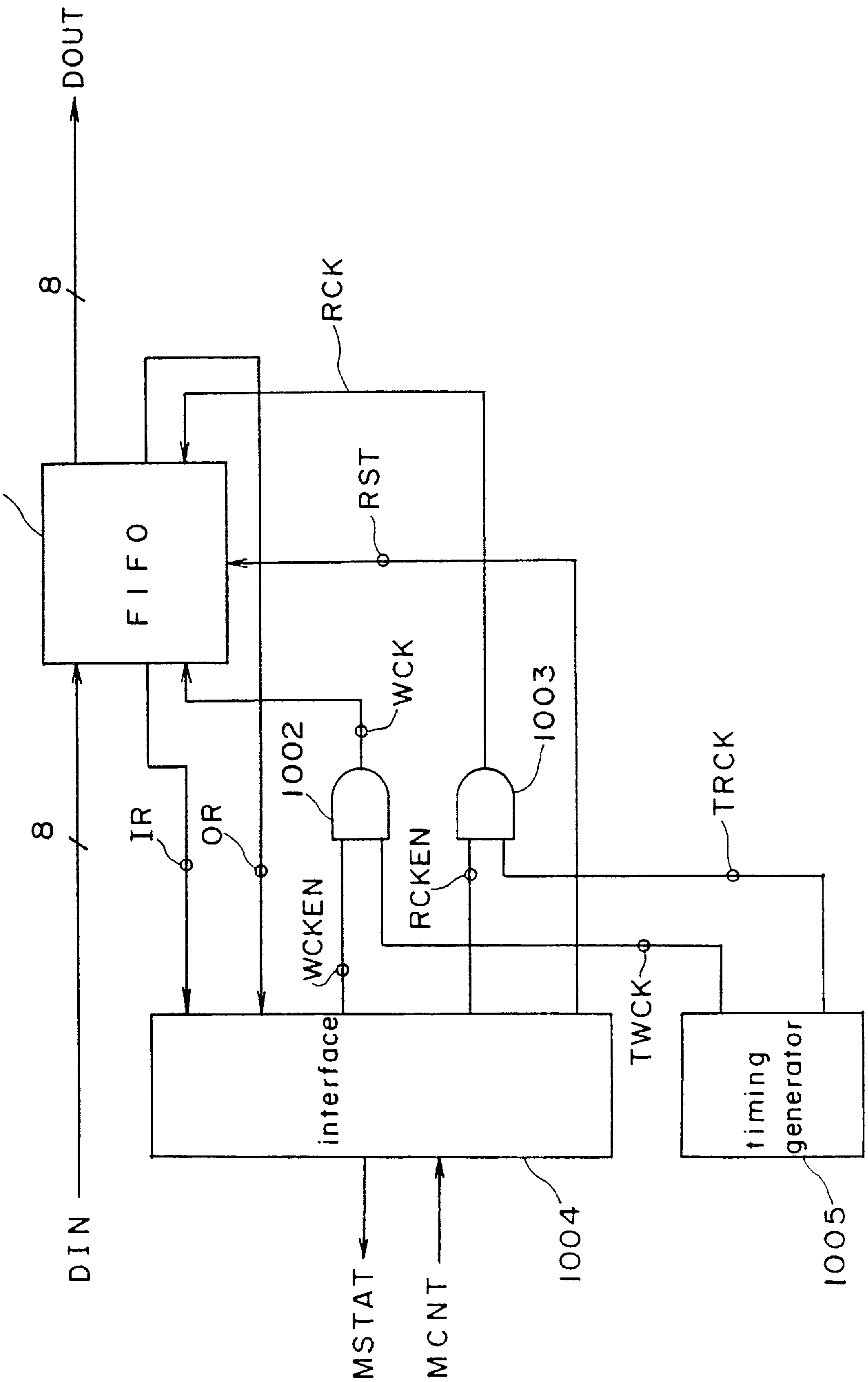

DOUT
8
RCK
1001
FIFO
RST
WCK
1003
1002
8
IR
OR
TRCK
RCKEN
WCKEN
TWCK
interface
timing generator
DIN
MSTAT
MCNT
1004
1005

Fig. 11

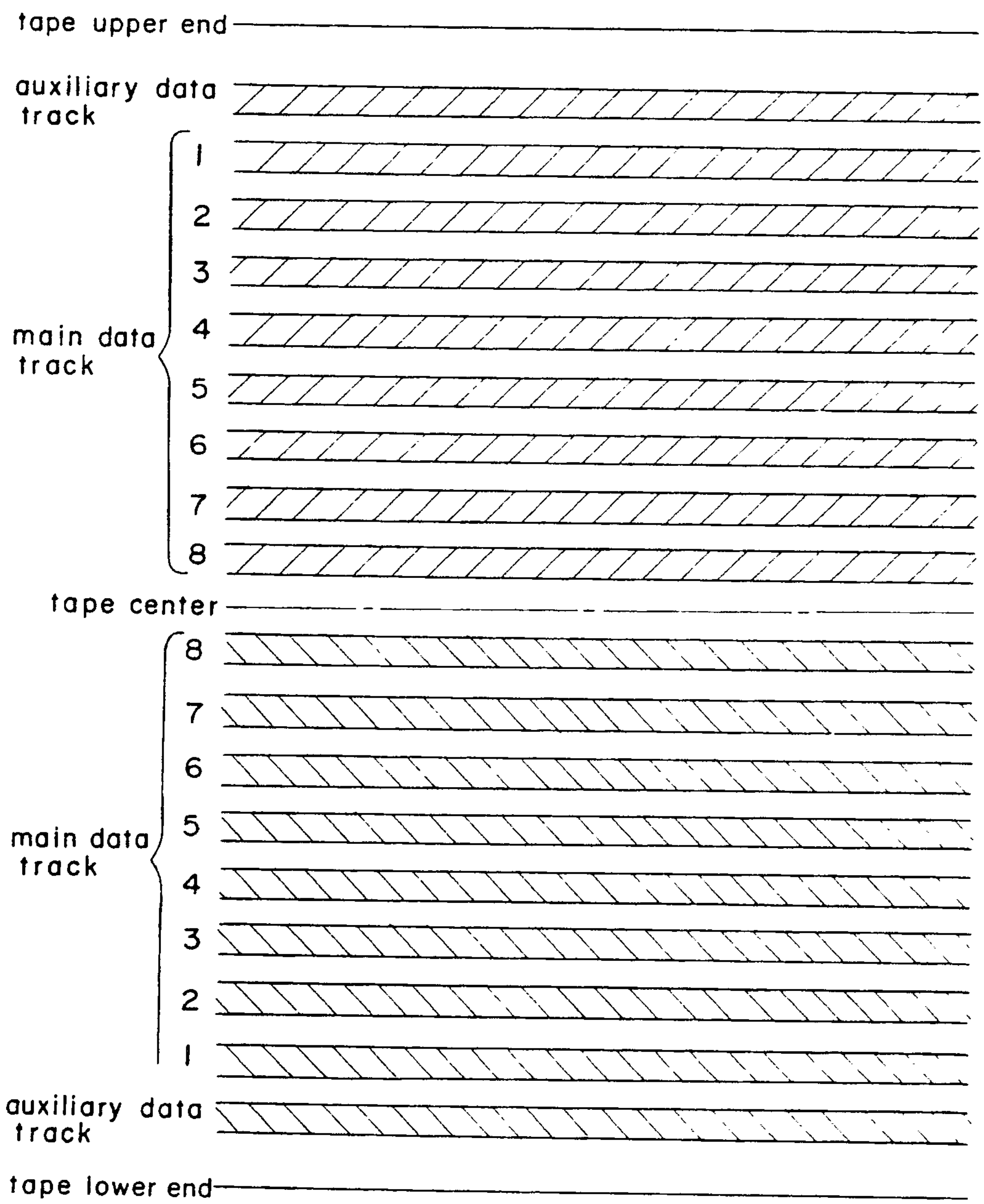
tape upper end
auxiliary data track
main data track
1
2
3
4
5
6
7
8
tape center
8
7
6
5
4
3
2
1
main data track
auxiliary data track
tape lower end

*Fig. 12*

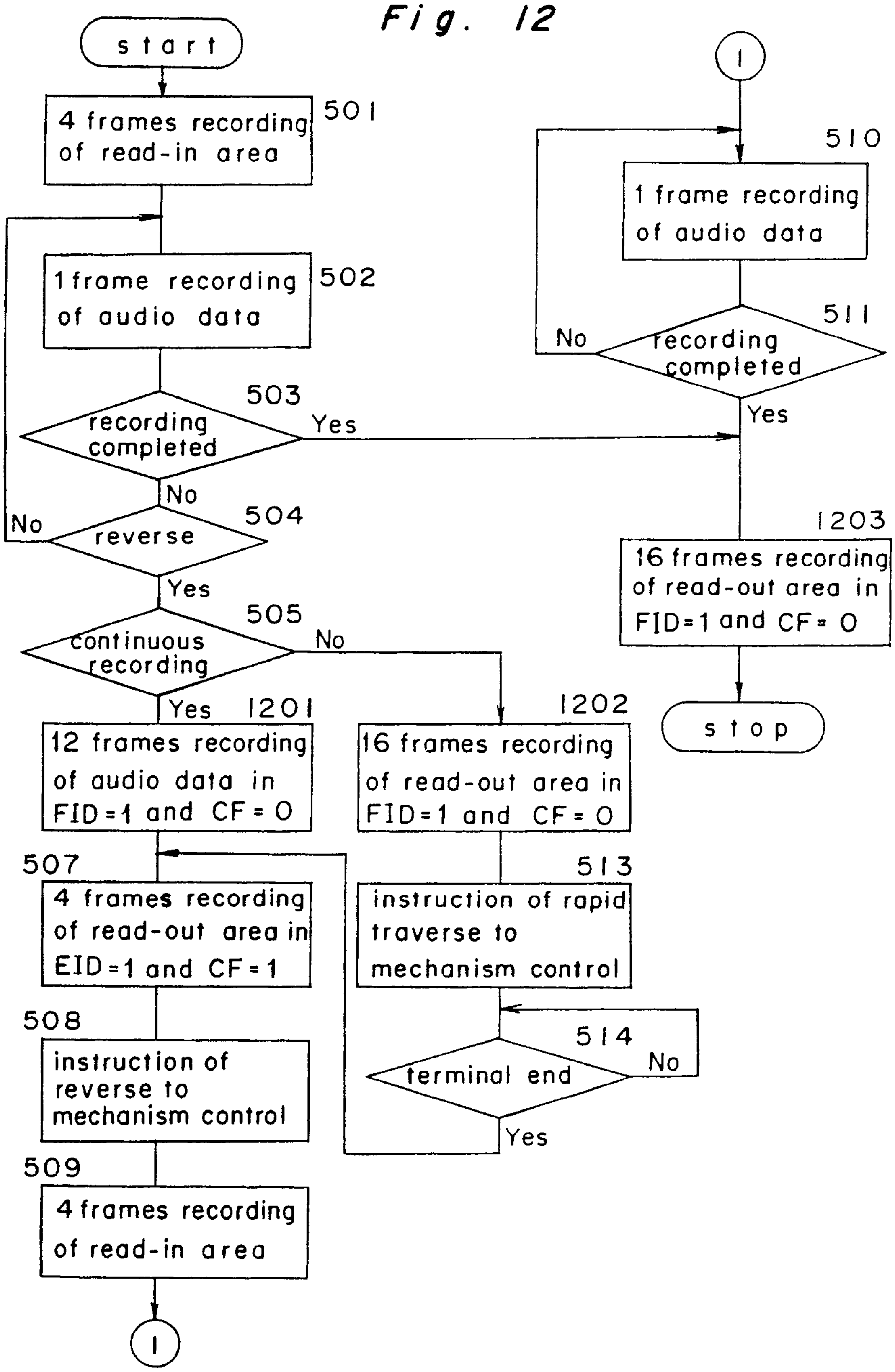
start
501
4 frames recording of read-in area
502
1 frame recording of audio data
503
recording completed
Yes
No
504
reverse
No
Yes
505
continuous recording
No
Yes
1201
12 frames recording of audio data in FID=1 and CF=0
1202
16 frames recording of read-out area in FID=1 and CF=0
507
4 frames recording of read-out area in EID=1 and CF=1
513
instruction of rapid traverse to mechanism control
508
instruction of reverse to mechanism control
514
terminal end
No
Yes
509
4 frames recording of read-in area
1
1
510
1 frame recording of audio data
511
recording completed
No
Yes
1203
16 frames recording of read-out area in FID=1 and CF=0
stop

Fig. 13

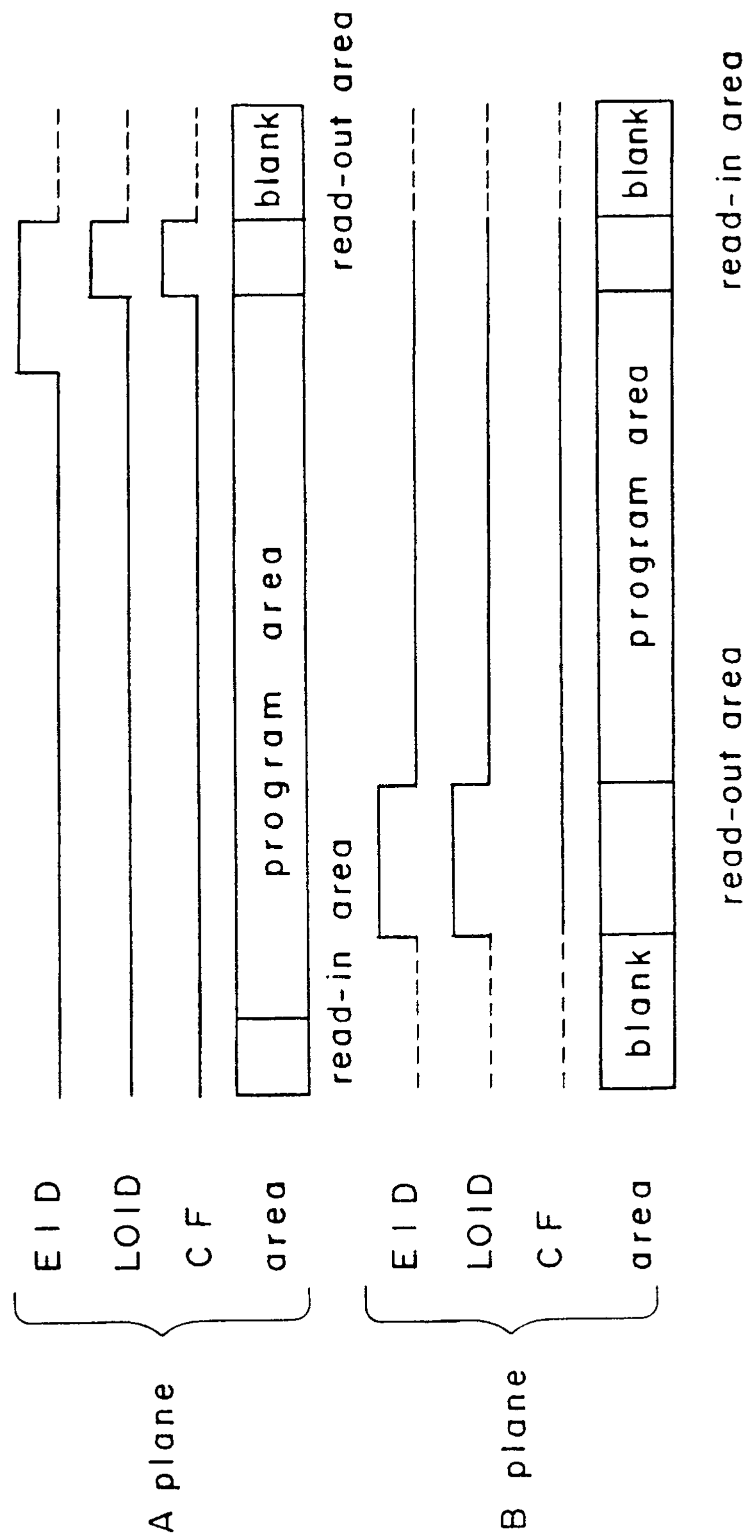
A plane
B plane
EID
LOID
CF
area
blank
program area
read-in area
read-out area

European Patent Office

# EUROPEAN SEARCH REPORT

Application Number: EP 90123963.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A2 - 0 323 910 (SONY) * Abstract; fig. 2,3; claims 1-3 * -- | 1,7-10 | G 11 B 27/032<br>G 11 B 27/28 |
| A | EP - A2 - 0 203 797 (SONY) * Abstract; fig. 2-6; claim 1 * -- | 1,3 | |
| A | DE - A1 - 3 145 650 (SONY) * Abstract; fig. 1; claims 1,2,7-10 * -- | 1-6 | |
| A | DE - A1 - 3 020 602 (DIGITAL EQUIPMENT) * Fig. 1,2; page 11, line 8 - page 12, line 23 * -- | 1,3,7 | |
| A | US - A - 4 587 577 (TSUNODA) * Abstract; column 1, line 64 - column 2, line 30; claims * ---- | 1,3,7 | TECHNICAL FIELDS SEARCHED (Int. Cl.5)<br>G 11 B 27/00<br>H 04 N 5/00 |

The present search report has been drawn up for all claims

| Place of search | Date of completion of the search | Examiner |
|---|---|---|
| VIENNA | 22-02-1991 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)